# EUROPÄISCHE PATENTSCHRIFT

(11) **EP 2 161 274 B1**
(45) Veröffentlichungstag und Bekanntmachung des Hinweises auf die Patenterteilung: **19.05.2010**
(21) Anmeldenummer: 08163060.0
(22) Anmeldetag: 27.08.2008
(51) Int. Cl.: C07F 7/18

(54) **Silan-/Harnstoff-Verbindung als hitzeaktivierbarer Härter für Epoxidharzzusammensetzungen**
Silane/urea compound as heat-activated hardener for epoxy resin compounds
Liaison silane-résine en tant que durcisseur pouvant être activé par la chaleur pour compositions de résine époxy

(43) Veröffentlichungstag der Anmeldung: 10.03.2010
(73) Patentinhaber: Sika Technology AG, 6340 Baar (CH)
(72) Erfinder: Kramer, Andreas, 8006 Zürich (CH)
(74) Vertreter: Sika Patent Attorneys

(56) Entgegenhaltungen:
- EP-A- 1 717 240
- WO-A-95/00259
- US-A1- 2003 159 773
- US-A1- 2007 175 579
- DATABASE CA [Online] CHEMICAL ABSTRACTS SERVICE, COLUMBUS, OHIO, US; TAKANASHI, MASANORI: "Polyorganosiloxane emulsion coating compositions containing ureido group-contg. organoalkoxysilanes and airbags therefor" XP002512945 gefunden im STN Database accession no. 1998:498067 -& JP 03 664831 B2 (TOSHIBA SILICONE CO., LTD., JAPAN; GE TOSHIBA SILICONE CO., LTD.) 29. Juni 2005 (2005-06-29)

## Beschreibung

### Technisches Gebiet

Die Erfindung betrifft das Gebiet der Silane und Härter für hitzehärtende Epoxidharze.

### Stand der Technik

Silane sind schon seit langem als Haftvermittler für Klebstoffe bekannt.

Harnstoffsilane werden für die Herstellung von Sol-Gelen und Xerogelen verwendet, wie Russ. J. Appl. Chem. 2006, 79, 981-986 und Russ. J. Gen. Chem. 2004, 74, 1658-1664 offenbaren. Hierbei werden die Harnstoffsilane mit Tetraethoxysilan zu einem einheitlichen Sol, bzw. Gel, kondensiert.

Harnstoffsilane sind weiterhin zum Teil als Haftvermittler schon bekannt. So beschreibt JP03664831 eine Silicon-Emulsion, welche N,N'-bis[3-(triethoxysilyl)propyl-Harnstoff enthält zur Erhöhung der Haftung, d.h. als Haftvermittler, auf Textilien. EP 1 717 240 A1 beschreibt Organoalkoxysilane, welche eine Harnstoff- oder Thioharnstoff- oder Carbamat- oder Thiocarbamatgruppe als Haftvermittler in feuchtigkeitshärtenden Zusammensetzungen, insbesondere auf Basis von Isocyanat- oder Silanterminierten Polymeren. US2003/0159773 A1 und US2007/0175579 A1 offenbaren Epoxidharzzusammensetzungen, welche 3-Ureidopropyltrimethoxysilan als Haftvermittler enthalten.

WO 95/00259 A2 beschreibt den Auftrag einer wässrigen Silanzusammensetzung, unter anderem 3-Ureidopropyltrimethoxysilan, auf ein brüchiges Oxidsubstrat zu dessen Verfestigung. Die Verfestigung tritt hierbei ohne Beitrag eines Harzes zu Tage.

Hitzehärtende Epoxidharzzusammensetzungen sind seit langem bekannt. Hierfür werden Härter eingesetzt, welche durch erhöhte Temperatur aktiviert werden. Harnstoff-Verbindungen sind eine wichtige Klasse von derartigen hitzeaktivierbaren Härtern für Epoxidharze. Häufig weisen derartige Harnstoff-Verbindungen auch einen beschleunigenden Einfluss von anderen hitzeaktivierbaren Härtern mit Epoxidharzen auf.

Ein wichtiges Einsatzgebiet von hitzehärtenden Epoxidharzzusammensetzungen findet sich im Fahrzeugbau, insbesondere beim Verkleben oder beim Ausschäumen von Hohlräumen im Rohbau. In beiden Fällen wird nach der Applikation der Epoxidharzzusammensetzung die Karosserie im KTL-(Kathodische Tauchlackierung)-Ofen erhitzt, wodurch auch die hitzehärtende Epoxidharzzusammensetzung ausgehärtet und gegebenenfalls geschäumt wird. Beispielsweise offenbaren W02004/106402 A2 und W02004/055092 A1 hitzehärtende Epoxidharzzusammensetzungen mit Harnstoff-Verbindungen als hitzeaktivierbare Härter.

Es sind derzeit jedoch Bestrebungen im Markt im Gange, die Temperatur der Aushärtung stark abzusenken. Somit ist im Markt ein grosses Bedürfnis nach hitzehärtenden Epoxidharzzusammensetzungen vorhanden, welche auch bei tieferen Temperaturen, d.h. bei einer Temperatur von unter 180°C, bereits nach sehr kurzer Zeit, typischerweise 10 bis 15 Minuten, aushärten. Deshalb werden aromatische Harnstoffe eingesetzt, welche aufgrund ihrer Struktur bedeutend reaktiver sind. Es hat sich jetzt aber gezeigt, dass die Verwendung von derartigen aromatischen Harnstoffen zu grossen Problemen in der Lagerstabilität der hitzehärtenden Epoxidharzzusammensetzungen führt

### Darstellung der Erfindung

Aufgabe der vorliegenden Erfindung ist es daher, hitze-aktivierbare Härter für Epoxidharze zur Verfügung zu stellen, welche eine Aushärtung von Epoxidharzen bei tieferen Temperaturen ermöglichen und trotzdem eine gute Lagerstabilität der diesen hitzeaktivierbaren Härter enthaltenden Epoxidharzzusammensetzung zu gewährleisten.

Diese Aufgabe konnte überraschenderweise durch eine Verwendung eines Silans der Formel (I) gemäss Anspruch 1 gelöst werden.

Derartige Silane eigenen sich ausserordentlich gut als hitzeaktivierbare Härter für Epoxidharzzusammensetzungen. Zudem können sie sehr gut zur Beschichtung oder Derivatisierung von Substraten, insbesondere von Füllstoffen oder flächigen Substraten verwendet werden, welche dann ihrerseits als hitzeaktivierbare Härter eingesetzt werden können.

Die Silane der Formel (I), insbesondere der Formel (I a), zeichnen sich dadurch aus, dass sie als Bestandteil von hitzehärtenden Epoxidharzzusammensetzungen eine starke Absenkung der Aushärtungstemperatur ermöglichen, ohne dass jedoch deren Lagerstabilität stark verschlechtert wird. Sie eigenen sich deshalb äusserst gut für einkomponentige hitzehärtende Epoxidharzklebstoffen, welche insbesondere Schlagzähigkeitsmodifikatoren aufweisen, als Rohbauklebstoffe für den Fahrzeugbau. Als besonders vorteilhaft hat sich gezeigt, dass die Silane der Formel (I) mit weiteren hitzeaktivierbaren Härtern eingesetzt werden.

Weiterhin hat es sich gezeigt, dass die Silane der Formel(I) zu erhöhter Haftung auf diversen Untergründen führt.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

In einem ersten Aspekt betrifft die vorliegende Erfindung die Verwendung eines Silans der Formel (I) oder eines Substrates, dessen Oberfläche mit einem Silan der Formel (I) beschichtet oder derivatisiert ist, als durch erhöhte Temperatur aktivierbarer Härter für Epoxidharze.

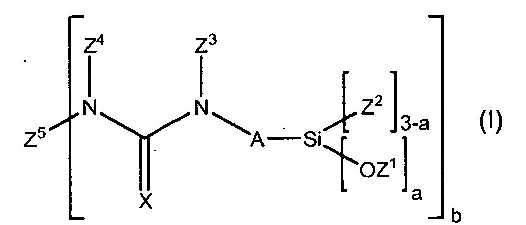

Hierbei steht A für eine, allenfalls verzweigte, Alkylengruppe mit 1 bis 4 C-Atomen oder für eine Phenylengruppe.
Z¹ steht für H oder eine Alkylgruppe mit 1 bis 4 C-Atomen, insbesondere für eine Methyl- oder Ethylgruppe.
Z² steht für H oder eine Phenylgruppe oder eine Alkylgruppe mit 1 bis 8 C-Atomen, insbesondere für eine Methylgruppe.
Z³ steht für H oder eine einwertige aromatische oder cycloaliphatische oder aliphatische Gruppe mit 1 bis 8 C-Atomen, welche gegebenenfalls mindestens eine Carbonsäureester-, Nitril-, Nitro-, Phosphonsäureester-, Sulfon- oder Sulfonsäureester-Gruppe aufweist, oder für A-Si(Z²)₃₋ₐ(OZ¹)ₐ.
Z⁴ steht für H oder eine einwertige aromatische oder cycloaliphatische oder aliphatische Gruppe mit 1 bis 8 C-Atomen.
Z⁵ steht für eine b-wertige aromatische oder araliphatische oder cycloaliphatische oder aliphatische Gruppe mit 1 bis 40 C-Atomen oder für die Gruppe A-Si(Z²)₃₋ₐ(OZ¹)ₐ.

Weiterhin steht X für O oder S, a für 1 oder 2 oder 3, b für 1 oder 2 oder 3 oder 4.

Schliesslich gilt die Massgabe, dass entweder Z³ oder Z⁴ für H steht.

Somit gilt, dass von den an der Harnstoffgruppe (NCON) bzw. Thioharnstoffgruppe (NCSN) hängenden zwei Gruppen Z³ und Z⁴ nur eine, nicht aber beide, für H steht.

Es ist nämlich für die Erfindung wesentlich, dass die in Formel (I) vorhandene(n) Harnstoffgruppe(n), bzw. Thioharnstoffgruppe(n), weder disubstiuierte noch tetra-substituierte, sondern tri-substituiere Harnstoffgruppe(n) bzw. Thioharnstoffgruppe(n) ist (sind).

In diesem Dokument ist die Verwendung des Terms "unabhängig voneinander" in Zusammenhang mit Substituenten, Reste oder Gruppen dahin gehend auszulegen, dass in demselben Molekül die gleich bezeichneten Substituenten, Resten oder Gruppen gleichzeitig mit unterschiedlicher Bedeutung auftreten können.

In der gesamten hier vorliegenden Schrift werden mit der Vorsilbe "Poly" wie beispielsweise in "Polyisocyanat", "Polythioisocyanat", "Polyamin", "Polyol", "Polyphenol" und "Polymercaptan" Moleküle bezeichnet, die formal zwei oder mehr der jeweiligen funktionellen Gruppen enthalten.

Unter einem "Schlagzähigkeitsmodifikator" wird in diesem Dokument ein Zusatz zu einer Epoxidharzmatrix verstanden, der bereits bei geringen Zuschlägen von 0.1 - 50 Gew.-%, insbesondere von 0.5 - 40 Gew.-%, eine deutliche Zunahme der Zähigkeit bewirkt und somit in der Lage ist, höhere Schlag- oder Stossbeanspruchung aufzunehmen, bevor die Matrix einreisst oder bricht.

Die gestrichelten Linien in den Formeln dieses Dokumentes stellen jeweils die Bindung zwischen dem jeweiligen Substituenten und dem dazugehörigen Molekülrest dar.

Der Begriff "Polymer" umfasst im vorliegenden Dokument einerseits ein Kollektiv von chemisch einheitlichen, sich aber in Bezug auf Polymerisationsgrad, Molmasse und Kettenlänge unterscheidenden Makromolekülen, das durch eine Polyreaktion (Polymerisation, Polyaddition, Polykondensation) hergestellt wurde. Der Begriff umfasst andererseits auch Derivate eines solchen Kollektivs von Makromolekülen aus Polyreaktionen, Verbindungen also, die durch Umsetzungen, wie beispielsweise Additionen oder Substitutionen, von funktionellen Gruppen an vorgegebenen Makromolekülen erhalten wurden und die chemisch einheitlich oder chemisch uneinheitlich sein können. Der Begriff umfasst im Weiteren auch sogenannte Prepolymere, das heisst reaktive oligomere Voraddukte, deren funktionelle Gruppen am Aufbau von Makromolekülen beteiligt sind.

Der Begriff "Polyurethanpolymer" umfasst sämtliche Polymere, welche nach dem sogenannten Diisocyanat-Polyadditions-Verfahren hergestellt werden. Dies schliesst auch solche Polymere ein, die nahezu oder gänzlich frei sind von Urethangruppen. Beispiele für Polyurethanpolymere sind Polyether-Polyurethane, Polyester-Polyurethane, Polyether-Polyharnstoffe, Polyharnstoffe, Polyester-Polyharnstoffe, Polyisocyanurate und Polycarbodiimide.

Es ist bevorzugt, dass a für 2 oder 3 steht. Meist bevorzugt stellt a einen Wert von 3 dar.

Die Gruppe A stellt vorzugsweise eine, allenfalls verzweigte, Alkylengruppe mit 1 bis 4 C-Atomen dar. Insbesondere steht A für eine Methylen-, Propylen-, n-Butylen- oder Isobutylengruppe. Besonders bevorzugt steht A für eine Propylengruppe.

Es ist bevorzugt, dass b für 1 oder 2 steht.

Die Methylgruppe ist die als eine einwertige aliphatische Gruppe mit 1 bis 8 C-Atomen für Z³ oder Z⁴ oder Z⁵ bevorzugte Gruppe.

Es hat sich gezeigt, dass es besonders vorteilhaft ist, wenn das Silan der Formel (I) keine aromatischen Anteile aufweist.

Falls Z³ für eine einwertige aromatische oder cycloaliphatische oder aliphatische Gruppe mit 1 bis 8 C-Atomen, welche mindestens eine Carbonsäureester-, Nitril-, Nitro-, Phosphonsäureester-, Sulfon- oder Sulfonsäureester-Gruppe aufweist, steht, steht Z³ insbesondere für die Gruppe der Formel (III) 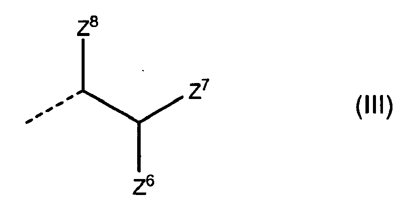 wobei
Z⁸ und Z⁶, unabhängig voneinander, für ein Wasserstoffatom oder für einen Rest steht, welcher ausgewählt ist aus der Gruppe bestehend aus -Z⁹, -COOZ⁹ und -CN, und
Z⁷ für ein Wasserstoffatom oder für einen Rest steht, welcher ausgewählt ist aus der Gruppe bestehend aus -CH₂-COOZ⁹, -COOZ⁹, -CONHZ⁹, -CON(Z⁹)₂, -CN, -NO₂, -PO(OZ⁹)₂, -SO₂Z⁹ und -SO₂OZ⁹,
   wobei
Z⁹ für einen einwertigen, gegebenenfalls mindestens ein Heteroatom enthaltenden, Kohlenwasserstoffrest, insbesondere mit 1 bis 6 C-Atomen steht.

Die Silane der Formel (I) können auf verschiedene Arten synthetisch leicht hergestellt werden.

In einer ersten Variante wird ein Isocyanat oder Thioisocyanat der Formel (II a) mit einem sekundären Aminosilan der Formel (II b), d.h. Z³ ist hier verschieden von H, zum Silan der Formel (I) umgesetzt.

Z⁵[NCX]_{b} (II a)

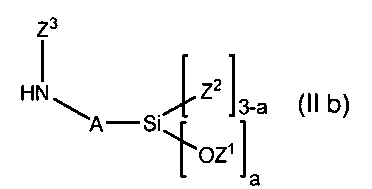

In einer zweiten Variante wird ein sekundäres Amin der Formel (II c), d.h. Z⁴ ist hier verschieden von H, mit einem Isocyanatosilan oder Thioisocyanatosilan der Formel (II d) zum Silan der Formel (I) umgesetzt.

Z⁵[NHZ⁴]_{b} (II c)

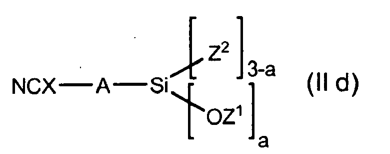

In einer dritten Variante wird eine Verbindung der Formel (II e) mit einem Aminosilan der Formel (II f) zum Silan der Formel (I) umgesetzt.

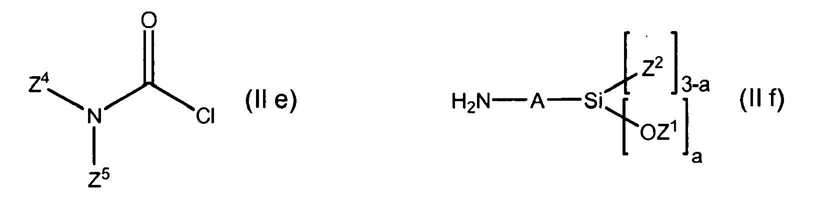

Die erste Variante eignet sich insbesondere für das Herstellen von Silanen mit mehreren Harnstoffgruppen, bzw. Thioharnstoffgruppen, d.h. wo b>1 ist. Die hierfür nötigen Polyisocyanate sind leicht erhältlich.

Als Isocyanate der Formel (II a) eignen sich Mono- oder Polyisocyanate. Die Mono- oder Polyisocyanate können aromatisch oder aliphatisch sein.

Als aromatische Polyisocyanate eignen sich beispielsweise monomere Di- oder Triisocyanate wie 2,4- und 2,6-Toluylendiisocyanat und beliebige Gemische dieser Isomeren (TDI), 4,4'-, 2,4'- und 2,2'-Diphenylmethandiisocyanat und beliebige Gemische dieser Isomeren (MDI), Gemische aus MDI und MDI-Homologen (polymeres MDI oder PMDI), 1,3- und 1,4-Phenylendiisocyanat, 2,3,5,6-Tetramethyl-1,4-diisocyanatobenzol, Naphthalin-1,5-diisocyanat (NDI), 3,3'-Dimethyl-4,4'-diisocyanatodiphenyl (TODI), Dianisidindiisocyanat (DADI), 1,3,5-Tris-(isocyanatomethyl)-benzol, Tris-(4-isocyanatophenyl)-methan, Tris-(4-isocyanatophenyl)-thiophosphat, Oligomere und Polymere der vorgenannten Isocyanate, sowie beliebige Mischungen der vorgenannten Isocyanate. Bevorzugt sind MDI und TDI.

Als aliphatische Polyisocyanate eignen sich beispielsweise monomere Di- oder Triisocyanate wie 1,4-Tetramethylendiisocyanat, 2-Methylpentamethylen-1,5-diisocyanat, 1,6-Hexamethylendiisocyanat (HDI), 2,2,4- und 2,4,4-Trimethyl-1,6-hexamethylendiisocyanat (TMDI), 1,10-Decamethylendiisocyanat, 1,12-Dodecamethylendiisocyanat, Lysin- und Lysinesterdiisocyanat, Cyclohexan-1,3- und -1,4-diisocyanat, 1-Methyl-2,4- und -2,6-diisocyanatocyclohexan und beliebige Gemische dieser Isomeren (HTDI oder H₆TDI), 1-Isocyanato-3,3,5-trimethyl-5-isocyanatomethyl-cyclohexan (=Isophorondiisocyanat oder IPDI), Perhydro-2,4'- und -4,4'-diphenylmethandiisocyanat (HMDI oder H₁₂MDI), 1,4-Diisocyanato-2,2,6-trimethylcyclohexan (TMCDI), 1,3- und 1,4-Bis-(isocyanatomethyl)-cyclohexan, m- und p-Xylylendiisocyanat (m- und p-XDI), m- und p-Tetramethyl-1,3- und -1,4-xylylendiisocyanat (m- und p-TMXDI), Bis-(1-Isocyanato-1-methylethyl)-naphthalin, Dimer- und Trimerfettsäureisocyanate wie 3,6-Bis-(9-isocyanatononyl)-4,5-di-(1-heptenyl)-cyclohexen (Dimeryldiisocyanat), α,α,α',α',α",α"-Hexamethyl-1,3,5-mesitylentriisocyanat, Oligomere und Polymere der vorgenannten Isocyanate, sowie beliebige Mischungen der vorgenannten Isocyanate. Bevorzugt sind HDI und IPDI.

Als Polyisocyanat geeignet ist in einer weiteren Ausführungsform ein Polyisocyanat in der Form eines monomeren Di- oder Triisocyanates oder eines Oligomeren eines monomeren Diisocyanates, wobei als monomeres Di- oder Triisocyanat beispielsweise die vorgenannten aromatischen und aliphatischen Di- und Triisocyanate geeignet sind. Als Oligomer eines monomeren Diisocyanates geeignet sind insbesondere die Oligomere von HDI, IPDI und TDI. Solche Oligomere stellen in der Praxis üblicherweise Gemische von Substanzen mit unterschiedlichen Oligomerisationsgraden und/oder chemischen Strukturen dar. Vorzugsweise weisen sie eine mittlere NCO-Funktionalität von 2.1 bis 4.0 auf und enthalten insbesondere Isocyanurat-, Iminooxadiazindion-, Uretdion-, Urethan-, Biuret-, Allophanat-, Carbodiimid-, Uretonimin- oder Oxadiazintrion-Gruppen. Bevorzugt weisen sie einen niedrigen Gehalt an monomeren Diisocyanaten auf. Kommerziell erhältliche Typen sind insbesondere HDI-Biurete, beispielsweise Desmodur^{®} N 100 und Desmodur^{®} N 3200 (von Bayer), Tolonate^{®} HDB und Tolonate^{®} HDB-LV (von Rhodia) sowie Duranate^{®} 24A-100 (von Asahi Kasei); HDI-Isocyanurate, beispielsweise Desmodur^{®} N 3300, Desmodur^{®} N 3600 und Desmodur^{®} N 3790 BA (von Bayer), Tolonate^{®} HDT, Tolonate^{®} HDT-LV und Tolonate^{®} HDT-LV2 (von Rhodia), Duranate^{®} TPA-100 und Duranate^{®} THA-100 (von Asahi Kasei) sowie Coronate^{®} HX (von Nippon Polyurethane); HDI-Uretdione, beispielsweise Desmodur^{®} N 3400 (von Bayer); HDI-Iminooxadiazindione, beispielsweise Desmodur^{®} XP 2410 (von Bayer); HDI-Allophanate, beispielsweise Desmodur^{®} VP LS 2102 (von Bayer); IPDI-Isocyanurate, beispielsweise Desmodur^{®} Z 4470 (von Bayer) und Vestanat^{®} T1890/100 (von Evonik); TDI-Oligomere, beispielsweise Desmodur^{®} IL (von Bayer); sowie gemischte Isocyanurate auf Basis TDI / HDI, zum Beispiel Desmodur^{®} HL (von Bayer).

Als Monoisocyanate eignen sich insbesondere Butyisocyanat, Pentylisocyanat, Hexylisocyanat, Octylisocyanat, Decylisocyanat, Dodecylisocyanat, Octadecylisocyanat, Cyclohexylisocyanat, Methylcyclohexylisocyanat, Phenylisocyanat, Benzylisocyanat, 2-Methoxyphenylisocyanat, oder p-Toluolsulfonylisocyanat.

Als Thioisocyanate der Formel (II a) eignen sich Mono- oder Polythioisocyanate. Die Mono- oder Polythioisocyanate können aromatisch oder aliphatisch sein.

Als Thioisocyanate kommen insbesondere die den oben als Mono- oder Polyisocyanate erwähnten analogen Verbindungen, welche anstelle der Isocyanatgruppe(n) Thioisocyanatgruppe(n) aufweisen.

Die sekundären Aminosilane der Formel (II b) sind zuweilen kommerziell erhältlich oder lassen sich aus einem Aminosilan der Formel (II f), insbesondere durch eine Michael-artigen Addition an einen Michael-Akzeptor der Formel (III a) oder (III b), herstellen.

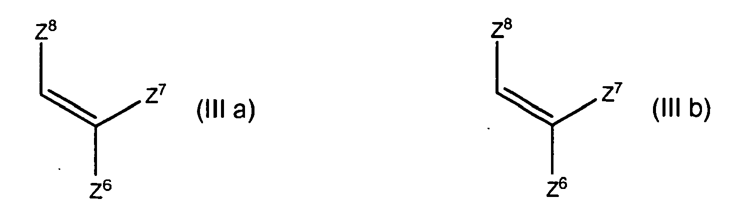

Der Begriff "Michael-Akzeptor" bezeichnet im vorliegenden Dokument Verbindungen, welche aufgrund der in ihnen enthaltenen, durch Elektronenakzeptor-Reste aktivierten Doppelbindungen befähigt sind, mit primären Aminogruppen (NH₂-Gruppen) in einer der Michael-Addition analogen Weise nucleophile Additionsreaktionen einzugehen (Hetero-Michael-Addition).

Besonders bevorzugte Michael-Akzeptoren der Formel (III a) oder (III b) sind Acrylnitril, Acryl- und Methacrylsäureester, Acryl- oder Methacrylsäureamide, Maleinsäure- und Fumarsäurediester, Citraconsäurediester und Itaconsäurediester.

Bevorzugte sekundäre Aminosilane der Formel (II b), welche so über eine Michael-artige Addition erhalten werden, sind N-(3-Trimethoxysilyl-propyl)-amino-bernsteinsäuredimethylester und -diethylester; sowie deren Analoga mit Ethoxy- oder Isopropoxygruppen anstelle der Methoxygruppen am Siliziumatom, meist bevorzugt N-(3-Trimethoxysilyl-propyl)-amino-bernsteinsäure-diethylester.

Als sekundäre Aminosilane der Formel (II b) auch besonders geeignet sind N-Butyl-3-aminopropyltrimethoxysilan, N-Phenyl-3-aminopropyl-trimethoxysilan, N-Butyl-3-aminopropyltriethoxysilan und N-Phenyl-3-aminopropyl-triethoxysilan.

In einer Ausführungsform wird ein sekundäres Aminosilan der Formel (II b), in welchem Z³ für A-Si(Z²)₃₋ₐ(OZ¹)ₐ steht, verwendet. Derartige sekundäre Aminosilane sind vorzugsweise Bis(3-trimethoxysilylpropyl)amin oder Bis(3-triethoxysilylpropyl)amin.

Als sekundäres Amin der Formel (II c) sind insbesondere geeignet Dimethylamin, Diethylamin, Di-n-propylamin, Diisopropylamin, Di-n-butylamin, Diisobutylamin, Di-sek.-butylamin, Dipentylamin, Dihexylamin, Di-2-ethylhexylamin, Cyclohexylamin, Cycloheptylamin, N-Methylethylamin, N-Methylbutylamin, N-Ethylbutylamin, Dicyclohexylamin, Diphenylamin, und Dibenzylamin.

Als Isocyanatosilan oder Thioisocyanatosilan Formel (II d) sind insbesondere geeignet jene, welche ausgewählt sind aus der Gruppe bestehend aus Isocyanatomethyltrimethoxysilan, Isocyanatomethyldimethoxymethylsilan 3-Isocyanatopropyltrimethoxysilan, 3-Isocyanatopropyldimethoxymethylsilan, Thioisocyanatomethyltrimethoxysilan, Thioisocyanatomethyldimethoxymethylsilan 3-Thioisocyanatopropyltrimethoxysilan, 3-Thioisocyanatopropyldimethoxymethylsilan und deren Analoga mit Ethoxy- oder Isopropoxygruppen anstelle der Methoxygruppen am Siliziumatom. Bevorzugt als Als Isocyanatosilan oder Thioisocyanatosilan Formel (II d) sind 3-Isocyanatopropyltrimethoxysilan und 3-Thioisocyanatopropyltrimethoxysilan, insbesondere 3-Isocyanatopropyltrimethoxysilan.

Die Verbindungen der Formel (II e) sind einfach zugänglich, bzw. kommerziell erhältlich. Besonders bevorzugt als Verbindung der Formel (II e) ist N,N-Dimethyl-carbamoylchlorid.

Als Aminosilans der Formel (II f) geeignet sind insbesondere Aminosilane, welche ausgewählt sind aus der Gruppe bestehend aus 3-Aminopropyltrimethoxysilan, 3-Aminopropyl-dimethoxymethylsilan, 3-Amino-2-methylpropyltrimethoxysilan, 4-Aminobutyl-trimethoxysilan, 4-Aminobutyl-dimethoxymethylsilan, 4-Amino-3-methylbutyl-trimethoxysilan, 4-Amino-3,3-dimethylbutyl-trimethoxysilan, 4-Amino-3,3-dimethylbutyl-dimethoxymethylsilan, 2-Aminoethyltrimethoxysilan, 2-Aminoethyl-dimethoxymethylsilan, Aminomethyl-trimethoxysilan, Aminomethyl-dimethoxymethylsilan, Aminomethylmethoxydimethylsilan und deren und deren Analoga mit Ethoxy- oder Isopropoxygruppen anstelle der Methoxygruppen am Siliziumatom. Besonders bevorzugt ist das Aminosilan der Formel (IIf) 3-Aminopropyl-trimethoxysilan, 3-Aminopropyl-dimethoxymethylsilan, 3-Aminopropyl-triethoxysilan oder 3-Aminopropyl-diethoxymethylsilan.

So sind beispielsweise geeignete Silane der Formel (I) als Addukte von 3-Aminopropyltrimethoxysilan mit N,N-Dimethylcarbamoylchlorid, von N-Methyl-3-aminopropyltriethoxysilan mit Butylisocyanat oder HDI oder IPDI, von N-Cyclohexyl-3-aminopropyltrimethoxysilan mit Phenylisocyanat oder Butylisocyanat oder HDI oder MDI, von 3-Isocyanatopropyltriethoxysilan mit Dimethylamin, von N-Phenyl-3-aminopropyltriethoxysilan mit Butylisocyanat oder Phenylisocyanat, von N-Phenyl-3-aminopropyltriethoxysilan mit HDI oder MDI, von Bis(3-trimethoxysilylpropyl)amin mit Butylisocyanat oder Phenylisocyanat oder HDI oder MDI, von 3-Aminopropylmethyldimethoxysilan mit N,N-Dimethylcarbamoylchlorid, bzw. N-Methyl-3-aminopropyldimethoxysilan mit Butylisocyanat, Phenylisocyanat oder HDI oder MDI herstellbar.

Besonders bevorzugt sind einerseits Silane der Formel (I), bei denen b verschieden von 1 ist und dass Z⁴ für H steht.

Spezifische Silane der Formel (I), nämlich Silane der Formel (I a), sind zudem ein weiterer Gegenstand der vorliegenden Erfindung.

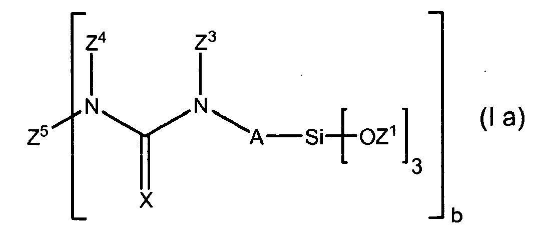

Silane der Formel (I a) sind in drei Klassen einteilbar:

Sie sind entweder aus einer ersten Klasse *(Klasse 1)* oder aus einer zweiten Klasse (*Klasse 2)* oder aus einer dritten Klasse (*Klasse 3)*.

In der *Klasse 1* der Silane der Formel (I a) steht
A für CH₂-CH₂-CH₂, Z¹ für CH₃, Z³ für H, Z⁴ für CH₃, Z⁵ für CH₃, X für O und b für 1.

In der *Klasse 2* der Silane der Formel (I a) steht
A für CH₂-CH₂-CH₂, Z¹ für CH₃, Z³ für CH₃, Z⁴ für H, Z⁵ für CH₃, X für O und b für 1.

In der *Klasse 3* der Silane der Formel (I a) steht
A für CH₂, Z¹ für CH₃ oder CH₂CH₃, Z³ für H, Z⁴ für eine einwertige aliphatische Gruppe mit 1 bis 12 C-Atomen, Z⁵ für eine einwertige aliphatische Gruppe mit 1 bis 12 C-Atomen, X für O und b für 1.

Der Vollständigkeit halber wird hier darauf verwiesen, dass aufgrund der Tatsache, dass diese Silane der Formel (I a) ausgewählte Silane der Formel (I) sind, es selbstverständlich ist, dass in diesem Dokument für Silane der Formel (I) gemachte Aussagen, auch für die Silane der Formel (I a) gelten, auch wenn jeweils nicht direkt Bezug auf Formel (I a) gemacht wird.

Es ist möglich, dass das Silan der Formel (I) direkt als Härter für Epoxidharze, welcher durch erhöhte Temperatur aktivierbar ist, verwendet werden kann, oder aber das Silan der Formel (I) kann auf der Oberfläche eines Substrates vorhanden sein und dergestalt als Härter für Epoxidharze, welcher durch erhöhte Temperatur aktivierbar ist, verwendet werden. Hierbei kann die Oberfläche des Substrates mit dem Silan der Formel (I) beschichtet oder aber derivatisiert, d.h. chemisch verbunden, sein. Ob eine Beschichtung oder eine Derivatisierung einer Oberfläche eines Substrates mit dem Silan der Formel (I) möglich ist, hängt stark von der Art des Substrates ab.

Somit ist auch ein Substrat, dessen Oberfläche mit Silan der Formel (I) beschichtet oder derivatisiert ist, ein weiterer Gegenstand der vorliegenden Erfindung.

Silangruppen, wie sie im Silan der Formel (I) vorhanden sind, weisen mindestens eine Si-O-Z¹-Funktionalität auf, welche unter dem Einfluss von Wasser zu Silanolgruppen (-Si-OH) hydrolysieren. Derartige Silanolgruppen sind nun in der Lage mit Oberflächengruppen, insbesondere Oberflächen-OH-Gruppen, zu kondensieren, wodurch eine chemische Anbindung des Silans der Formel (I) an die Oberfläche des Substrates erfolgt (= Derivatisierung der Oberfläche des Subrates mit dem Silan der Formel (I)). Es ist dem Fachmann selbstverständlich klar, dass Silanolgruppen auch untereinander kondensieren können und zu Siloxanen führen können. Je nach Substrat kann das Silan aber auch unverändert an der Oberfläche des Substrates vorhanden sein.

Durch Verwendung eines auf einer Oberfläche gebundenen, bzw. vorhandenen, Silans der Formel (I) ist dieses Silan auf der Substratoberfläche bleibend immobilisiert, bzw. zumindest kurzzeitig immobilisiert. Eine derartige Immobilisierung hat den Vorteil, dass der Härter gezielt an gewissen Orten eingesetzt werden kann.

Als derartiges Substrat werden vorwiegend einerseits Füllstoffe und andererseits flächige Substrate verwendet.

In einer bevorzugten Ausführungsform ist das Substrat ein flächiges Substrat. Derartige flächige Substrate sind insbesondere solche, welche verklebt werden sollen. Beispielsweise sind derartige flächige Substrate plattige Substrate wie Bleche, Scheiben oder Flansche; gewölbte Substrate wie Kotflügel, Scheinwerfergehäuse, Rohre oder Hohlräume.

Eine besonders geeignete Anwendung von derartig beschichteten oder derivatisierten flächigen Substraten ist das folgende Verfahren zum Verkleben, welches die folgenden Schritte umfasst:
α) Applizieren eines Silans der Formel (I) auf die Oberfläche eines zu verklebenden flächigen Substrates;
β) Applizieren einer Epoxidharzzusammensetzung, welche mindestens ein Epoxidharz **EH** mit durchschnittlich mehr als einer Epoxidgruppe pro Molekül enthält, auf die mit Silan der Formel (I) beschichtete bzw. derivatisierte Oberfläche;
γ) Kontaktieren der Epoxidharzzusammensetzung mit einer weiteren zu verklebenden Oberfläche eines Substrates;
δ) Erhitzen des flächigen Substrates und/oder der Epoxidharzzusammensetzung auf eine Temperatur von 100 - 220°C, insbesondere von 120 - 200°C, bevorzugt zwischen 160 und 190°C.

Durch die Erhitzung des flächigen Substrates und/oder der Epoxidharzzusammensetzung in Schritt δ) wird der hitzeaktivierbare Härter, d.h. das auf der Oberfläche des flächigen Substrates befindliche Silan oder dessen Derivat, aktiviert und bewirkt die Aushärtung des damit in Kontakt stehenden Epoxidharzes. Durch diese Aushärtungsreaktion bedingte weitere Aufwärmung der Epoxidharzzusammensetzung wird nun auch die weiter von der Substratoberfläche entfernte Epoxidharzzusammensetzung zur Aushärtung gebracht und so weiter. Somit kann ein gezieltes, vom Substrat aus gestartetes, Aushärten der Epoxydharzklebstoffzusammensetzung erzielt werden, was bisweilen zu einem gewollten und gezielt herstellbaren Gradienten in den mechanischen Eigenschaften des Epoxidharzklebstoffes führt. Ist die Oberfläche des Substrates aus Schritt γ) ebenfalls mit Silan der Formel (I) beschichtet oder derivatisiert, lassen sich Klebverbunde erzielen, deren Klebstoff im Kern andere mechanische Eigenschaften als an der Grenze zum jeweiligen Substrat aufweisen.

Das Applizieren des Silans der Formel (I) auf die Oberfläche des zu verklebenden flächigen Substrates in Schritt α) kann beispielsweise unter Zuhilfenahme eines Lösungsmittels und gegebenenfalls in Gegenwart von Katalysatoren für die Hydrolyse der Si-O-Z¹-Gruppen des Silans der Formel (I) und/oder Kondensation von Silanolgruppen Hydrolyse erfolgen. Derartige Katalysatoren sind dem Fachmann für Silane bestens bekannt. Typischerweise wird eine Mischung eines Silans mit einem leichtflüchtigen Lösungsmittel und allenfalls eines Katalysators, insbesondere einer organischen Säure, verwendet. Als Lösungsmittel werden insbesondere Wasser, Alkohole, Ketone, Aldehyde, Carbonsäureester und Kohlenwasserstoffe verwendet. Der Siedepunkt bei Normdruck beträgt insbesondere 100 °C oder weniger. Besonders bevorzugt als hierfür verwendete Lösungsmittel sind Methanol, Ethanol, Isopropanol, Hexan, Heptan und Methylethylketon. Die Applikation kann insbesondere durch Aufsprühen, Besprühen, Aufwischen, Anpinseln, Aufrollen oder Eintauchen erfolgen. Die Applikation erfolgt vorzugsweise in einer geringen Schichtstärke, typischerweise von weniger als 100 Mikrometer.

Es ist vorteilhaft, dass zwischen Schritt α) und Schritt β) eine Zeitspanne von mindestens 1 Minute, typischerweise zwischen 5 Minuten und 30 Minuten, verstreicht. Dies ist besonders dann von Vorteil, wenn das Silan in Schritt α) in einem Lösungsmittel aufgetragen wird. Das Lösungsmittel kann in dieser Zeitspanne vollständig oder zumindest weitgehend verdampfen. Die Schichtdicke des auf der Oberfläche befindlichen Silans ist vor dem Beginn des Schrittes β) vorzugsweise weniger als 100 Mikrometer.

In einer noch mehr bevorzugten Ausführungsform ist das mit Silan der Formel(I) beschichtete oder derivatisierte Substrat ein Füllstoff, vorzugsweise ein anorganischer Füllstoff, insbesondere ein anorganischer Füllstoff, welcher Ca- und/oder Si- und/oder Al-Atome, bevorzugt Si- und/oder Al-Atome, enthält.

Besonders geeignete derartige Füllstoffe sind Calciumcarbonat, Siliziumdioxid, insbesondere pyrogene Kieselsäure, Kaolin, Aluminiumhydroxid, Aluminiumoxid und Alumoxane. Meist bevorzugt sind pyrogene Kieselsäure und Alumoxane. Der Füllstoff ist vorzugsweise trocken oder zumindest lediglich an der Oberfläche feucht. Um eine homogene Oberflächenbeschichtung bzw. Derivatisierung zu erhalten, ist es von besonderem Vorteil, wenn der Füllstoff rieselfähig ist.

Die Beschichtung, bzw. Derivatisierung, des Füllstoffes erfolgt in gleicher Art und Weise, erfolgt in gleicher Art und Weise, wie es für die Beschichtung, bzw. Derivatisierung, von flächigen Substraten in Schritt α) oben beschrieben wurde. Es kann aber auch der Füllstoff in das Silan der Formel (I), vorzugsweise in eine Mischung umfassend Silan (I), mindestens einem der oben erwähnten Lösungsmittel und allenfalls eines oben erwähnten Katalysators eingerührt und nach der Beschichtung bzw. Derivatisierung anschliessend wieder abfiltriert werden. Es ist auch hier vorzuziehen, dass zwischen Applikation des Silans der Formel (I) und dem Einsatz des Füllstoffs in oder für Epoxidharzzusammensetzungen eine gewisse Zeitspanne von mindestens 1 Minute, typischerweise zwischen 5 Minuten und 30 Minuten, verstreicht.

Es ist wichtig, dass beim mit Silan der Formel (I) beschichteten oder derivatisierten Substrat, lediglich die Oberfläche beschichtet oder derivatisiert ist, d.h. jegliche Prozesse, bei welchen das Silan der Formel (I), direkt bei der Herstellung des Füllstoffes, zum Beispiel bei der Herstellung von Sol-Gelen oder Xerogelen, eingesetzt werden, sind nicht Gegenstand der Erfindung. Es ist nämlich für das Wesen der Erfindung wesentlich, dass lediglich die Oberfläche beschichtet oder derivatisiert ist. Es sind so nämlich einerseits bestehende, kommerziell leicht erhältliche und vor allem kostengünstige Füllstoffe verwendbar. Andererseits ist die Beschichtung bzw. Derivatisierung der Substrate ein sehr einfach zu handhabender Prozess, während die Prozesse einer in situ Füllstoffherstellung, z.B. für Sol-Gel oder Xerogele, sehr aufwändig, teuer und fehleranfällig sind.

Besonders bevorzugt handelt es sich bei diesen Füllstoffen um einen feinen Füllstoff, d.h. es wird bevorzugt, dass die mittlere Partikelgrösse des Füllstoffs kleiner als 50 Mikrometer, insbesondere kleiner als 1 Mikrometer ist. Meist bevorzugt sind sogenannte Nano-Füllstoffe, welche eine mittlere Partikelgrösse zwischen 1 Nanometer und 1 Mikrometer aufweisen.

Die vorgängig beschriebenen Silane der Formel (I) oder mit Silan der Formel (I) beschichtete oder derivatisierte Füllstoffe sind insbesondere Teil einer hitzehärtenden Epoxidharzzusammensetzung.

Deshalb betrifft die vorliegende Erfindung in einem weiteren Aspekt eine hitzehärtende Epoxidharzzusammensetzung enthaltend
- mindestens ein Epoxidharz **EH** mit durchschnittlich mehr als einer Epoxidgruppe pro Molekül;
- mindestens ein Silan der Formel (I) oder einen Füllstoff, dessen Oberfläche mit Silan der Formel (I) beschichtet oder derivatisiert ist, wie es oder er vorgängig im Detail beschrieben ist.

Das Epoxidharz **EH** mit durchschnittlich mehr als einer Epoxidgruppe pro Molekül ist vorzugsweise ein Epoxid-Flüssigharz oder ein Epoxid-Festharz. Der Begriff "Epoxid-Festharz" ist dem Epoxid-Fachmann bestens bekannt und wird im Gegensatz zu "Epoxid-Flüssigharzen" verwendet. Die Glastemperatur von Festharzen liegt über Raumtemperatur, d.h. sie lassen sich bei Raumtemperatur zu schüttfähigen Pulvern zerkleinern.
Bevorzugte Epoxid-Festharze weisen die Formel (V) auf

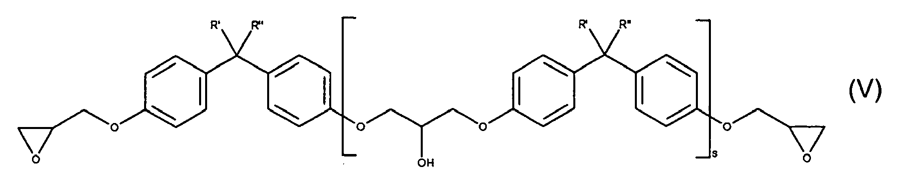

Hierbei stehen die Substituenten R' und R" unabhängig voneinander entweder für H oder CH₃. Weiterhin steht der Index s für einen Wert von > 1.5, insbesondere von 2 bis 12.

Derartige Epoxid-Festharze sind kommerziell erhältlich beispielsweise von Dow oder Huntsman oder Hexion.

Verbindungen der Formel (V) mit einem Index s zwischen 1 und 1.5 werden vom Fachmann als Semisolid-Epoxidharze bezeichnet. Für die hier vorliegende Erfindung werden sie ebenfalls als Festharze betrachtet. Bevorzugt sind jedoch Epoxid-Festharze im engeren Sinn, d.h. wo der Index s einen Wert von > 1.5 aufweist.

Bevorzugte Epoxid-Flüssigharze weisen die Formel (VI) auf

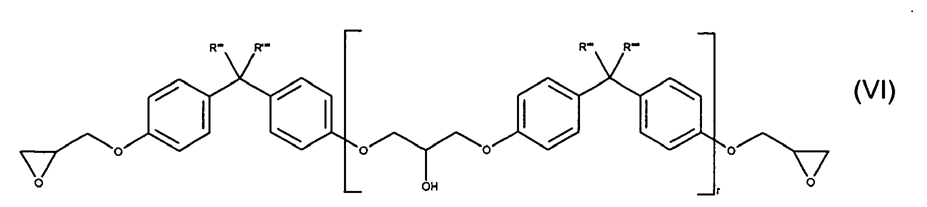

Hierbei stehen die Substituenten R"' und R"" unabhängig voneinander entweder für H oder CH₃. Weiterhin steht der Index r für einen Wert von 0 bis 1. Bevorzugt steht r für einen Wert von kleiner als 0.2.

Es handelt sich somit vorzugsweise um Diglycidylether von Bisphenol-A (DGEBA), von Bisphenol-F sowie von Bisphenol-A/F. Solche Flüssigharze sind beispielsweise als Araldite® GY 250, Araldite® PY 304, Araldite® GY 282 (Huntsman) oder D.E.R.™ 331 oder D.E.R.™ 330 (Dow) oder Epikote 828 (Hexion) erhältlich.

Weiterhin geeignet als Epoxidharz **EH** sind sogenannte Novolake. Diese weisen insbesondere die folgende Formel auf: 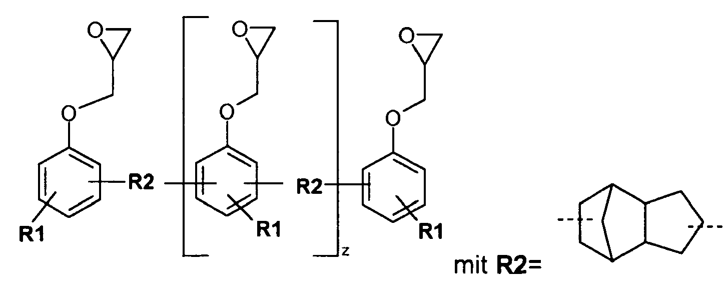 oder CH₂, **R1** = H oder Methyl und z = 0 bis 7.

Insbesondere handelt es sich hierbei um Phenol- oder Kresol-Novolake (**R2** = CH₂).

Solche Epoxidharze sind unter dem Handelsnamen EPN oder ECN sowie Tactix®556 von Huntsman oder unter der Produktereihe D.E.N.™ von Dow Chemical kommerziell erhältlich.

Bevorzugt stellt das Epoxidharz **EH** ein Epoxid-Flüssigharz der Formel (VI) dar. In einer noch mehr bevorzugten Ausführungsform enthält die hitzehärtende Epoxidharzzusammensetzung sowohl mindestens ein Epoxid-Flüssigharz der Formel (VI) als auch mindestens ein Epoxid-Festharz der Formel (V).

Der Anteil von Epoxidharzes **EH** beträgt vorzugsweise 10 - 85 Gewichts-%, insbesondere 15 - 70 Gewichts-%, bevorzugt 15 - 60 Gewichts-%, am Gewicht der hitzehärtenden Epoxidharzzusammensetzung.

Der Anteil des Silans der Formel (I) oder des Füllstoffs, dessen Oberfläche mit Silan der Formel (I) beschichtet oder derivatisiert ist, ist in der Zusammensetzung vorteilhaft derart gewählt, dass das Silan der Formel (I) oder der Silananteil des Füllstoffs 0.001 - 20 Gewichts-%, insbesondere 0.1 - 15 Gewichts-%, bevorzugt 0.5 - 10 Gewichts-%, bezogen auf das Gewicht der hitzehärtenden Epoxidharzzusammensetzung, beträgt. Der Klarheit halber wird hier darauf hingewiesen, dass neben dem auf dem Füllstoff als Silan der Formel (I) befindlichen Silan auch das mit dem Füllstoff chemisch gebundene Silan der Formel (I) als "Silan" für den Term "Silananteil des Füllstoffs" gilt. Somit ist es für die Bestimmung des Silananteils des Füllstoffs unerheblich, ob der das Silan an der Oberfläche des Füllstoffs frei oder chemisch gebunden ist, d.h. ob der Füllstoff mit Silan der Formel (I) beschichtet oder derivatisiert ist.

Die erfindungsgemässe Zusammensetzung enthält weiterhin vorzugsweise zusätzlich mindestens einen wärmeaktivierbaren Härter **B,** welcher insbesondere ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylhamstoff(Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe.

Dieser wärmeaktivierbare Härter **B** ist bei gleicher oder verschiedener Temperatur wie das Silan der Formel (I) aktivierbar.

Besonders bevorzugt als Härter **B** ist Dicyandiamid.

Vorteilhaft beträgt der Gesamtanteil des Härters **B** 1 - 10 Gewichts-%, vorzugsweise 2 - 8 Gewichts-%, bezogen auf das Gewicht der gesamten Zusammensetzung.

Die hitzehärtende Epoxidharzzusammensetzung kann weiterhin ein Thixotropiermittel **C** auf Basis eines Harnstoffderivates enthalten. Das Harnstoffderivat ist insbesondere ein Umsetzungsprodukt eines aromatischen monomeren Diisocyanates mit einer aliphatischen Aminverbindung. Es ist auch durchaus möglich, mehrere unterschiedliche monomere Diisocyanate mit einer oder mehreren aliphatischen Aminverbindungen oder ein monomeres Diisocyanat mit mehreren aliphatischen Aminverbindungen umzusetzen. Als besonders vorteilhaft hat sich das Umsetzungsprodukt von 4,4'-Diphenylmethylen-diisocyanat (MDI) mit Butylamin erwiesen.

Das Harnstoffderivat ist vorzugsweise in einem Trägermaterial vorhanden. Das Trägermaterial kann ein Weichmacher, insbesondere ein Phthalat oder ein Adipat sein, vorzugsweise ein Diisodecylphthalat (DIDP) oder Dioctyladipat (DOA). Das Trägermittel kann auch ein nicht-diffundierendes Trägermittel sein. Dies ist bevorzugt, um möglichst eine geringe Migration nach Aushärtung von nicht regierten Bestandteilen zu gewährleisten. Bevorzugt sind als nicht-diffundierende Trägermittel blockierte Polyurethanprepolymere.

Die Herstellung von solchen bevorzugten Harnstoffderivaten und Trägermaterialien sind im Detail in der Patentanmeldung US2002/0007003 A1 beschrieben. Das Trägermaterial ist vorteilhaft ein blockiertes Polyurethanprepolymer, insbesondere erhalten durch Umsetzung eines trifunktionellen Polyetherpolyols mit IPDI und anschliessender Blockierung der endständigen Isocyanatgruppen mit ε-Caprolactam.

Vorteilhaft beträgt der Gesamtanteil des Thixotropiermittels **C** 0 - 40 Gewichts-%, vorzugsweise 5 - 25 % Gewichts-%, bezogen auf das Gewicht der gesamten Zusammensetzung. Das Verhältnis vom Gewicht des Harnstoffderivates zum Gewicht des allenfalls vorhandenen Trägermittels beträgt vorzugsweise 2 / 98 bis 50 / 50, insbesondere 5 / 95 - 25 /75.

Es hat sich weiterhin gezeigt, dass es besonders vorteilhaft ist, wenn die hitzehärtende einkomponentige Epoxidharzzusammensetzung weiterhin zusätzlich mindestens einen Schlagzähigkeitsmodifikator **D** enthält.

Die Schlagzähigkeitsmodifikatoren **D** können fest oder flüssig sein.

Es hat sich gezeigt, dass der Schlagzähigkeitsmodifikator **D** vorteilhaft ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren, insbesondere in einer Menge von 0.1 - 50 Gewichts-%, insbesondere von 0.5 - 35 Gewichts-%, bevorzugt von 1 - 20 Gewichts-%, bezogen auf das Gewicht der hitzehärtenden Epoxidharzzusammensetzung.

In einer Ausführungsform ist dieser Schlagzähigkeitsmodifikatoren **D** ein Flüssigkautschuk **D1,** welcher ein carboxyl- oder epoxidterminiertes Acrylnitril/Butadien-Copolymer oder ein Derivat davon ist. Derartige Flüssigkautschuke sind beispielsweise unter dem unter dem Namen Hypro™(früher Hycar®) CTBN und CTBNX und ETBN von Nanoresins AG, Deutschland, bzw. Emerald Performance Materials LLC) kommerziell erhältlich. Als Derivate sind insbesondere Epoxidgruppen aufweisende Elastomer-modifizierte Prepolymere, wie sie unter der Produktelinie Polydis®, vorzugsweise aus der Produktelinie Polydis® 36.., von der Firma Struktol® (Schill+Seilacher Gruppe, Deutschland) oder unter der Produktelinie Albipox (Nanoresins, Deutschland) kommerziell vertrieben werden, geeignet.

In einer weiteren Ausführungsform ist der Schlagzähigkeitsmodifikator **D** ein Polyacrylatflüssigkautschuk **D2,** der mit flüssigen Epoxidharzen vollständig mischbar ist und sich erst beim Aushärten der Epoxidharzmatrix zu Mikrotröpfchen entmischt. Derartige Polyacrylatflüssigkautschuke sind beispielsweise unter der Bezeichnung 20208-XPA von Rohm und Haas erhältlich.

Es ist dem Fachmann klar, dass natürlich auch Mischungen von Flüssigkautschuken verwendet werden können, insbesondere Mischungen von carboxyl- oder epoxidterminiertes Acrylnitril/Butadien-Copolymeren oder Derivaten davon mit epoxidterminierten Polyurethanprepolymeren.

In einer weiteren Ausführungsform ist der Schlagzähigkeitsmodifikator **D** ein fester Schlagzähigkeitsmodifikator, welcher ein organisches Ionengetauschtes Schichtmineral **DE1** ist.

Das lonen-getauschte Schichtmineral **DE1** kann entweder ein Kationen-getauschtes Schichtmineral **DE1c** oder ein Anionen-getauschtes Schichtmineral DE1a sein.

Das Kationen-getauschte Schichtmineral **DE1c** wird hierbei erhalten aus einem Schichtmineral **DE1',** bei welchem zumindest ein Teil der Kationen durch organische Kationen ausgetauscht worden sind. Beispiele für derartige Kationen-getauschte Schichtmineralien **DE1c** sind insbesondere diejenigen, welche in US 5,707,439 oder in US 6,197,849 erwähnt sind. Ebenso ist dort das Verfahren zur Herstellung dieser Kationen-getauschten Schichtminerale **DE1c** beschrieben. Bevorzugt als Schichtmineral **DE1'** ist ein Schichtsilikat. Insbesondere bevorzugt handelt es sich beim Schichtmineral **DE1'** um ein Phyllosilikat, wie sie in US 6,197,849 Spalte 2, Zeile 38 bis Spalte 3, Zeile 5 beschrieben sind, insbesondere um einen Bentonit. Als besonders geeignet haben sich Schichtmineral **DE1'** wie Kaolinit oder ein Montmorillionit oder ein Hectorit oder ein Illit gezeigt.

Zumindest ein Teil der Kationen des Schichtminerals **DE1'** wird durch organische Kationen ersetzt. Beispiele für derartige Kationen sind n-Octylammonium, Trimethyldodecylammonium, Dimethyldodecylammonium oder Bis(hydroxyethyl)octadecylammonium oder ähnliche Derivate von Aminen, die aus natürlichen Fetten und Ölen gewonnen werden können; oder Guanidinium Kationen oder Amidiniumkationen; oder Kationen der N-substituierten Derivate von Pyrrolidin, Piperidin, Piperazin, Morpholin, Thiomorpholin; oder Kationen von 1,4-Diazobicyclo[2.2.2]octan (DABCO) und 1-Azobicyclo[2.2.2]octan; oder Kationen von N-substituierten Derivaten von Pyridin, Pyrrol, Imidazol, Oxazol, Pyrimidin, Chinolin, Isochinoilin, Pyrazin, Indol, Bezimidazol, Benzoxaziol, Thiazol, Phenazin und 2,2'-Bipyridin. Weiterhin sind geeignet cyclische Amidiniumkationen, insbesondere solche, wie sie in US 6,197,849 in Spalte 3 Zeile 6 bis Spalte 4 Zeile 67 offenbart werden. Cyclische Ammoniumverbindungen zeichnen sich gegenüber linearen Ammoniumverbindungen durch eine erhöhte Thermostabilität aus, da der thermische Hoffmann - Abbau bei ihnen nicht auftreten kann.

Bevorzugte Kationen-getauschte Schichtminerale **DE1c** sind dem Fachmann unter dem Term Organoclay oder Nanoclay bekannt und sind kommerziell zum Beispiel unter den Gruppennamen Tixogel® oder Nanofil® (Südchemie), Cloisite® (Southern Clay Products) oder Nanomer® (Nanocor Inc.) oder Garmite® (Rockwood) erhältlich.

Das Anionen-getauschte Schichtmineral **DE1a** wird hierbei erhalten aus einem Schichtmineral **DE1",** bei welchem zumindest ein Teil der Anionen durch organische Anionen ausgetauscht worden sind. Ein Beispiel für ein derartig Anionen-getauschtes Schichtmineral **DE1a** ist ein Hydrotalcit **DE1",** bei dem zumindest ein Teil der Carbonat-Anionen der Zwischenschichten durch organische Anionen ausgetauscht wurden.

Es ist durchaus auch möglich, dass die Zusammensetzung gleichzeitig ein Kationen-getauschtes Schichtmineral **DE1c** und ein Anionen-getauschtes Schichtmineral DE1a enthält.

In einer weiteren Ausführungsform ist der Schlagzähigkeitsmodifikator **D** ein fester Schlagzähigkeitsmodifikator, welcher ein Blockcopolymer **DE2** ist. Das Blockcopolymer **DE2** wird erhalten aus einer anionischen oder kontrollierten radikalischen Polymerisation von Methacrylsäureester mit mindestens einem weiteren eine olefinisch Doppelbindung aufweisenden Monomeren. Als eine olefinische Doppelbindung aufweisende Monomere sind insbesondere solche bevorzugt, bei denen die Doppelbindung unmittelbar mit einem Heteroatom oder mit mindestens einer weiteren Doppelbindung konjugiert ist. Insbesondere sind Monomere geeignet, welche ausgewählt sind aus der Gruppe umfassend Styrol, Butadien, Acrylnitril und Vinylacetat. Bevorzugt sind Acrylat-Styrol-Acrylsäure (ASA) Copolymere, erhältlich z.B. unter dem Namen GELOY 1020 von GE Plastics.

Besonders bevorzugte Blockcopolymere **DE2** sind Blockcopolymere aus Methacrylsäuremethylester, Styrol und Butadien. Derartige Blockcopolymere sind beispielsweise als Triblockcopolymere unter der Gruppenbezeichnung SBM bei Arkema erhältlich.

In einer weiteren Ausführungsform ist der Schlagzähigkeitsmodifikator **D** ein Core-Shell Polymer **DE3.** Core-Shell-Polymere bestehen aus einem elastischen Kernpolymer und einem starren Schalen-Polymer. Insbesondere geeignete Core-Shell-Polymere bestehen aus einem Kern (Core) aus elastischem Acrylat- oder Butadien-Polymer, den eine starre Schale (Shell) eines starren thermoplastischen Polymers umhüllt. Diese Core-Shell Struktur bildet sich entweder spontan durch Entmischen eines Blockcopolymeren oder ist durch die Polymerisationsführung als Latex oder Suspensionspolymerisation mit nachfolgender Pfropfung vorgegeben. Bevorzugte Core-Shell-Polymere sind sogenannte MBS Polymere, welche kommerziell unter dem Handelsnamen Clearstrength™ von Atofina, Paraloid™ von Rohm and Haas oder F-351™ von Zeon erhältlich sind.

Besonders bevorzugt sind Core-Shell Polymerpartikel, die bereits als getrockneter Polymerlatex vorliegen. Beispiele hierfür sind GENIOPERL M23A von Wacker mit Polysiloxankern und Acrylatschale, strahlungsvernetzte Kautschukpartikel der NEP Reihe, hergestellt von Eliokem oder Nanoprene von Lanxess oder Paraloid EXL von Rohm und Haas.

Weitere vergleichbare Beispiele für Core-Shell-Polymere werden unter dem Namen Albidur^{™} von Nanoresins AG, Deutschland, angeboten.

Ebenso geeignet sind nanoskalige Silikate in Epoxid-Matrix, wie sie unter dem Handelsnamen Nanopox® von Nanoresins AG, Deutschland, angeboten werden.

In einer weiteren Ausführungsform ist der Schlagzähigkeitsmodifikator **D** ein Umsetzungsprodukt **DE4** eines carboxylierten festen Nitrilkautschuks mit überschüssigem Epoxidharz.

In einer weiteren Ausführungsform ist der Schlagzähigkeitsmodifikator **D** ein blockiertes Polyurethanpolymer der Formel (IV).

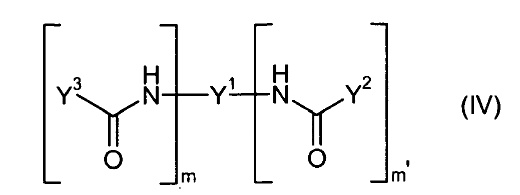

Hierbei stehen m und m' je für Werte zwischen 0 und 8, mit der Massgabe, dass m + m' für einen Wert von 1 bis 8 steht.

Bevorzugt ist m verschieden von 0.

Weiterhin steht Y¹ für ein mit m+m' Isocyanatgruppen terminiertes lineares oder verzweigtes Polyurethanpolymer **PU1** nach dem Entfernen aller endständigen Isocyanatgruppen.

Y² steht unabhängig von einander für eine Blockierungsgruppe, welche sich bei einer Temperatur über 100°C abspaltet.

Y³ steht unabhängig von einander für eine Gruppe der Formel (IV').

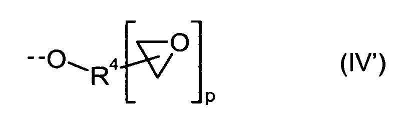

Hierbei steht R⁴ seinerseits für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen und p steht für die Werte 1, 2 oder 3.

Unter einem "araliphatischen Rest" versteht man in diesem Dokument eine Aralkylgruppe, d.h. durch eine durch Arylgruppen substituierte Alkylgruppe (vgl. "Aralkyl", Römpp, CD Römpp Chemie Lexikon, Version 1, Stuttgart/New York, Georg Thieme Verlag 1995).

Y² steht insbesondere unabhängig voneinander für einen Substituenten, welcher ausgewählt ist aus der Gruppe bestehend aus

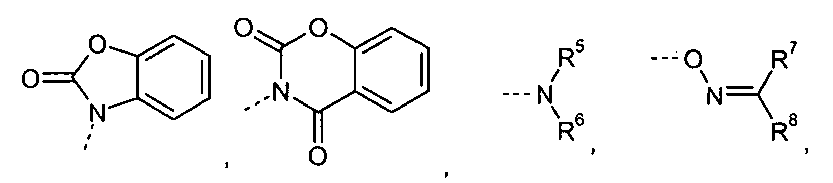

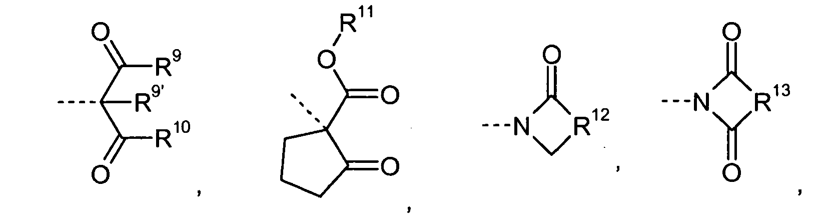

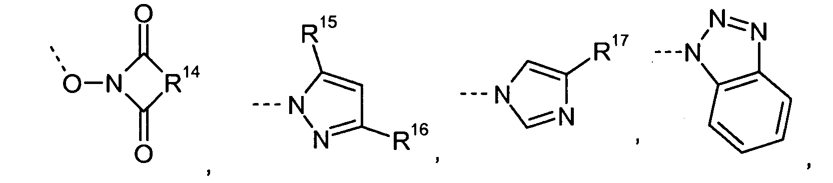

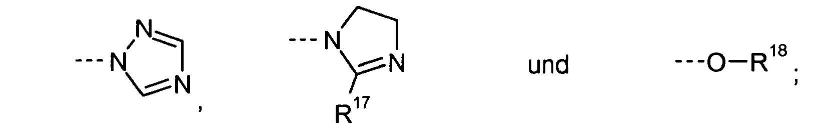

Hierbei stehen R⁵, R⁶, R⁷ und R⁸ je unabhängig voneinander für eine Alkyl- oder Cycloalkyl- oder Aralkyl- oder Arylalkyl-Gruppe oder aber R⁵ bildet zusammen mit R⁶, oder R⁷ zusammen mit R⁸, einen Teil eines 4- bis 7- gliedrigen Rings, welcher allenfalls substituiert ist.

Weiterhin steht R⁹, R^{9'} und R¹⁰ je unabhängig voneinander für eine Alkyl- oder Aralkyl- oder Arylalkyl-Gruppe oder für eine Alkyloxy- oder Aryloxy- oder Aralkyloxy-Gruppe und R¹¹ für eine Alkylgruppe.

R¹², R¹³ und R¹⁴ stehen je unabhängig voneinander für eine Alkylengruppe mit 2 bis 5 C-Atomen, welche gegebenenfalls Doppelbindungen aufweist oder substituiert ist, oder für eine Phenylengruppe oder für eine hydrierte Phenylengruppe und R¹⁵, R¹⁶ und R¹⁷ stehen je unabhängig voneinander für H oder für eine Alkylgruppe oder für eine Arylgruppe oder eine Aralkylgruppe.

Schliesslich steht R¹⁸ für eine Aralkylgruppe oder für eine ein- oder mehrkernige substituierte oder unsubstituierte Aromatengruppe, welche gegebenenfalls aromatische Hydroxylgruppen aufweist.

Als R¹⁸ sind insbesondere einerseits Phenole oder Bisphenole nach Entfernung einer Hydroxylgruppe zu betrachten. Bevorzugte Bespiele für derartige Phenole und Bisphenole sind insbesondere Phenol, Kresol, Resorcinol, Brenzkatechin, Cardanol (3-Pentadecenylphenol (aus Cashewnuss-Schalen-Öl)), Nonylphenol, mit Styrol oder Dicyclopentadien umgesetzte Phenole, Bis-Phenol-A, Bis-Phenol-F und 2,2'-Diallyl-bisphenol-A.

Als R¹⁸ sind andererseits insbesondere Hydroxybenzylalkohol und Benzylalkohol nach Entfernung einer Hydroxylgruppe zu betrachten.

Falls R⁵, R⁶, R⁷, R⁸, R⁹, R^{9'}, R¹⁰, R¹¹, R¹⁵, R¹⁶ oder R¹⁷ für eine Alkylgruppe steht, ist diese insbesondere eine lineare oder verzweigte C₁-C₂₀-Alkylgruppe.

Falls R⁵, R⁶, R⁷, R⁸, R⁹, R^{9'}, R¹⁰, R¹⁵, R¹⁶, R¹⁷ oder R¹⁸ für eine Aralkylgruppe steht, ist diese Gruppierung insbesondere eine über Methylen gebundene aromatische Gruppe, insbesondere eine Benzylgruppe.

Falls R⁵, R⁶, R⁷, R⁸, R⁹, R^{9'} oder R¹⁰ für eine Alkylarylgruppe steht, ist diese insbesondere eine über Phenylen gebundene C₁- bis C₂₀-Alkylgruppe, wie beispielsweise Tolyl oder Xylyl.

Besonders bevorzugte Reste Y² sind Reste, welche ausgewählt sind aus der Gruppe bestehend aus

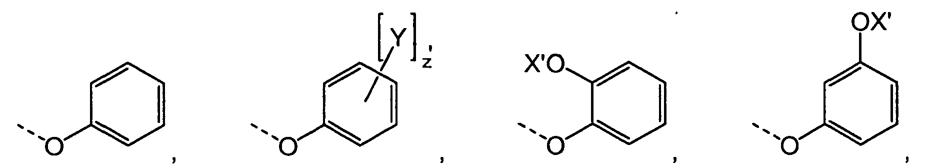

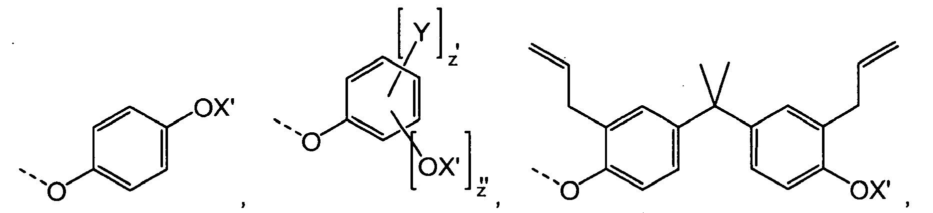

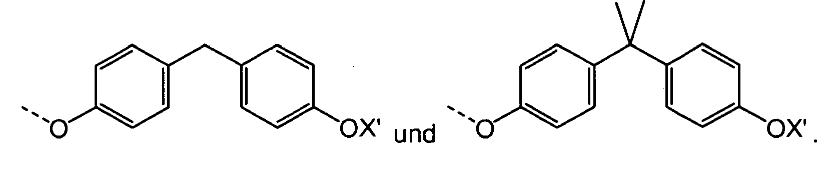

Der Rest Y steht hierbei für einen gesättigten oder olefinisch ungesättigten Kohlenwasserstoffrest mit 1 bis 20 C-Atomen, insbesondere mit 1 bis 15 C-Atomen. Als Y sind insbesondere Allyl, Methyl, Nonyl, Dodecyl oder ein ungesättigter C₁₅-Alkylrest mit 1 bis 3 Doppelbindungen bevorzugt.

Der Rest X' steht für H oder für eine Alkyl-, Aryl- oder Aralkylgruppe, insbesondere für H oder Methyl.

Die Indices z' und z" stehen für die Werte 0, 1, 2, 3, 4 oder 5, mit der Massgabe, dass die Summe z' + z" für einen Wert zwischen 1 und 5 steht.

Die Herstellung des blockierten Polyurethanpolymers der Formel (IV) erfolgt aus dem Isocyanatgruppen terminierten linearen oder verzweigten Polyurethanpolymeren **PU1** mit einer oder mehreren Isocyanat-reaktiven Verbindungen Y²H und oder Y³H. Falls mehrere derartige Isocyanat-reaktive Verbindungen eingesetzt werden, kann die Reaktion sequentiell oder mit einer Mischung dieser Verbindungen erfolgen.

Die Umsetzung erfolgt derart, dass die eine oder die mehreren Isocyanat-reaktiven Verbindungen Y²H und/oder Y³H stöchiometrisch oder im stöchiometrischen Überschuss eingesetzt werden, um zu gewährleisten, dass alle NCO-Gruppen umgesetzt sind.

Die Isocyanat-reaktive Verbindung Y³H ist eine Monohydroxyl-Epoxidverbindung der Formel (IVa).

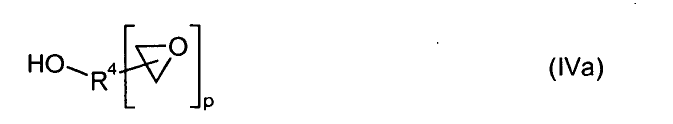

Falls mehrere derartige Monohydroxyl-Epoxidverbindungen eingesetzt werden, kann die Reaktion sequentiell erfolgen oder mit einer Mischung dieser Verbindungen erfolgen.

Die Monohydroxyl-Epoxidverbindung der Formel (IVa) weist 1, 2 oder 3 Epoxidgruppen auf. Die Hydroxylgruppe dieser Monohydroxyl-Epoxidverbindung (IVa) kann eine primäre oder eine sekundäre Hydroxylgruppe darstellen.

Solche Monohydroxyl-Epoxidverbindungen lassen sich beispielsweise durch Umsetzung von Polyolen mit Epichlorhydrin erzeugen. Je nach Reaktionsführung entstehen bei der Umsetzung von mehrfunktionellen Alkoholen mit Epichlorhydrin als Nebenprodukte auch die entsprechenden Monohydroxyl-Epoxidverbindungen in unterschiedlichen Konzentrationen. Diese lassen sich durch übliche Trennoperationen isolieren. In der Regel genügt es aber, das bei der Glycidylisierungsreaktion von Polyolen erhaltene Produktgemisch aus vollständig und partiell zum Glycidylether reagiertem Polyol einzusetzen. Beispiele solcher hydroxylhaltigen Epoxide sind Butandiolmonoglycidylether (enthalten in Butandioldiglycidylether), Hexandiolmonoglycidylether (enthalten in Hexandioldiglycidylether), Cyclohexandimethanolglycidylether, Trimethylolpropandiglycidylether (als Gemisch enthalten in Trimethylolpropantriglycidylether), Glycerindiglycidylether (als Gemisch enthalten in Glycerintriglycidylether), Pentaerythrittriglycidylether (als Gemisch enthalten in Pentaerythrittetraglycidylether). Vorzugsweise wird Trimethylolpropandiglycidylether, welcher zu einem relativ hohen Anteil in üblich hergestellten Trimethylolpropantriglycidylether vorkommt, verwendet.

Es können aber auch andere ähnliche hydroxylhaltige Epoxide, insbesondere Glycidol, 3-Glycidyloxybenzylalkohol oder Hydroxymethyl-cyclohexenoxid eingesetzt werden. Weiterhin bevorzugt ist der β-Hydroxyether der Formel (IVb), der in handelsüblichen flüssigen Epoxidharzen, hergestellt aus Bisphenol-A (R = CH₃) und Epichlorhydrin, zu etwa 15 % enthalten ist, sowie die entsprechenden β-Hydroxyether der Formel (IVb), die bei der Reaktion von Bisphenol-F (R = H) oder des Gemisches von Bisphenol-A und Bisphenol-F mit Epichlorhydrin gebildet werden.

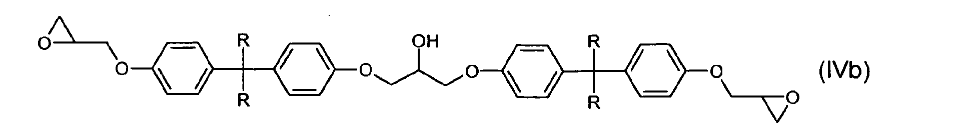

Weiterhin bevorzugt sind auch Destillationsrückstände, welche bei der Herstellung von hochreinen, destillierten Epoxid-Flüssigharzen anfallen. Solche Destillationsrückstände weisen eine bis zu drei Mal höhere Konzentration an hydroxylhaltigen Epoxiden auf als handelübliche undestillierte Epoxid-Flüssigharze. Im Weiteren können auch unterschiedlichste Epoxide mit einer β-Hydroxyether-Gruppe, hergestellt durch die Reaktion von (Poly-)Epoxiden mit einem Unterschuss von einwertigen Nukleophilen wie Carbonsäuren, Phenolen, Thiolen oder sec.- Aminen, eingesetzt werden.

Der Rest R⁴ ist insbesondere bevorzugt ein dreiwertiger Rest der Formel 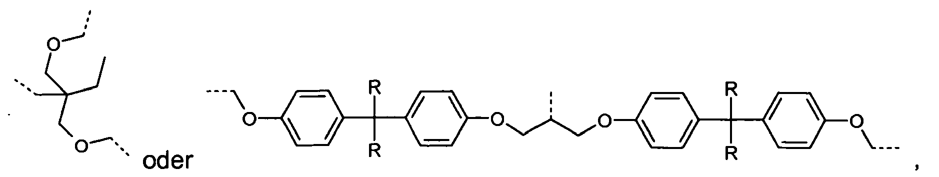 wobei R für Methyl oder H steht.

Die freie primäre oder sekundäre OH-Funktionalität der Monohydroxyl-Epoxidverbindung der Formel (IVa) lässt eine effiziente Umsetzung mit terminalen Isocyanatgruppen von Polymeren zu, ohne dafür unverhältnismässige Überschüsse der Epoxidkomponente einsetzen zu müssen.

Das Polyurethanpolymer **PU1,** auf dem Y¹ basiert, lässt sich aus mindestens einem Diisocyanat oder Triisocyanat sowie aus mindestens einem Polymeren **Q_{PM}** mit endständigen Amino-, Thiol- oder Hydroxylgruppen und / oder aus einem, gegebenenfalls substituierten, Polyphenol **Q_{PP}** herstellen.

Geeignete Diisocyanate sind beispielsweise aliphatische, cycloaliphatische, aromatische oder araliphatische Diisocyanate, insbesondere jene, welche als Diisocyanat der Formel (II a) bereits vorgängig erwähnt wurden. Bevorzugt sind HDI, IPDI, MDI oder TDI.

Geeignete Triisocyanate sind beispielsweise Trimere oder Biurete von aliphatischen, cycloaliphatischen, aromatischen oder araliphatischen Diisocyanaten, insbesondere die Isocyanurate und Biurete, welche als Polyisocyanate der Formel (II a) bereits vorgängig erwähnt wurden.

Selbstverständlich können auch geeignete Mischungen von Di- oder Triisocyanaten eingesetzt werden.

Als Polymere **Q_{PM}** mit endständigen Amino-, Thiol- oder Hydroxylgruppen sind insbesondere Polymere **Q_{PM}** mit zwei oder drei endständigen Amino-, Thiol- oder Hydroxylgruppen geeignet.

Als derartige geeignete Polymere **Q_{PM}** gelten insbesondere diejenigen, wie sie beispielsweise in WO 2008/049857 A1, insbesondere als **Q_{PM}** auf Seite 7, Zeile 25 bis Seite 11, Zeile 20, deren Inhalt hiermit insbesondere durch Bezugnahme eingeschlossen wird, offenbart sind.

Die Polymere **Q_{PM}** weisen vorteilhaft ein Equivalenzgewicht von 300 - 6000, insbesondere von 600 - 4000, bevorzugt von 700 - 2200 g/Equivalent NCO-reaktiver Gruppen auf.

Als Polymere **Q_{PM}** eignen sich insbesondere Polyoxyalkylenpolyole, auch Polyetherpolyole genannt, Hydroxyterminierte Polybutadienpolyole, Styrol-Acrylnitril gepfropfte Polyetherpolyole, Polyhydroxyterminierte Acrylnitril/Butadien-Copolymere, Polyesterpolyole sowie Polycarbonatpolyole.

Weiterhin besonders geeignet als Polymere **Q_{PM}** haben sich amphiphile Blockcopolymere, welche mindestens eine Hydroxylgruppe aufweisen, insbesondere solche, wie sie unter dem Handelsnamen Fortegra™, insbesondere Fortegra™ 100, von Dow Chemical, vertrieben werden, erwiesen.

Als Polyphenol **Q_{PP}** sind insbesondere geeignet Bis-, Tris- und Tetraphenole. Hierunter werden nicht nur reine Phenole, sondern gegebenenfalls auch substituierte Phenole verstanden. Die Art der Substitution kann sehr vielfältig sein. Insbesondere wird hierunter eine Substitution direkt am aromatischen Kern, an den die phenolische OH-Gruppe gebunden ist, verstanden. Unter Phenolen werden weiterhin nicht nur einkernige Aromaten, sondern auch mehrkernige oder kondensierte Aromaten oder Heteroaromaten verstanden, welche die phenolische OH-Gruppe direkt am Aromaten beziehungsweise Heteroaromaten aufweisen.

Besonders eignen sich die Bis- und Trisphenole. Als Bisphenole oder Trisphenole sind beispielsweise geeignet 1,4-Dihydroxybenzol, 1,3-Dihydroxybenzol, 1,2-Dihydroxybenzol, 1,3-Dihydroxytoluol, 3,5-Dihydroxybenzoate, 2,2-Bis(4-hydroxyphenyl)propan (=Bisphenol-A), Bis(4-hydroxyphenyl)methan (=Bisphenol-F), Bis(4-hydroxyphenyl)sulfon (=Bisphenol-S), Naphtoresorcin, Dihydroxynaphthalin, Dihydroxyanthrachinon, Dihydroxy-biphenyl, 3,3-bis(p-hydroxyphenyl)phthalide, 5,5-Bis(4-hydroxyphenyl)hexahydro-4,7-methano-indan, Phenolpthalein, Fluorescein, 4,4'-[bis-(hydroxyphenyl)-1,3-Phenylene-bis-(1-Methyl-ethyliden)] (=Bisphenol-M), 4,4'-[bis-(hydroxyphenyl)-1,4-Phenylenebis-(1-Methyl-ethyliden)] (=Bisphenol-P), 2,2'-Diallyl-bisphenol-A, Diphenole und Dikresole hergestellt durch Umsetzung von Phenolen oder Kresolen mit Di-isopropylidenbenzol, Phloroglucin, Gallsäureester, Phenol- oder Kresolnovolacke mit -OH-Funktionalität von 2.0 bis 3.5 sowie alle Isomeren der vorgenannten Verbindungen.

Besonders geeignet als in der Zusammensetzung gegebenenfalls vorhandenem Schlagzähigkeitsmodifikator **D** sind jene, wie sie in den folgenden Artikel bzw. Patentschriften, deren Inhalt hiermit durch Referenz mit eingeschlossen wird, offenbart sind: EP 0 308 664 A1, insbesondere Formel (I), besonders Seite 5, Zeile 14 bis Seite 13, Zeile 24; EP 0 338 985 A1, EP 0 353 190 A1, WO 00/20483 A1, insbesondere Formel (I), besonders Seite 8, Zeile 18 bis Seite 12, Zeile 2; WO 01/94492 A1, insbesondere die als D) und E) bezeichneten Reaktionsprodukte, besonders Seite 10, Zeile 15 bis Seite 14, Zeile 22; WO 03/078163 A1, insbesondere das als B) bezeichnete Acrylatterminierte Polyurethanharz, besonders Seite 14, Zeile 6 bis Seite 14, Zeile 35; WO 2005/007766 A1, insbesondere Formel (I) oder (II), besonders Seite 4, Zeile 5 bis Seite 11, Zeile 20; EP 1 728 825 A1, insbesondere Formel (I), besonders Seite 3, Zeile 21 bis Seite 4, Zeile 47; WO 2006/052726 A1, insbesondere das als b) bezeichnete amphiphilic block copolymer, besonders Seite 6, Zeile 17 bis Seite 9, Zeile 10; WO 2006/052729 A1, insbesondere das als b) bezeichnete amphiphilic block copolymer, besonders Seite 6, Zeile 25 bis Seite 10, Zeile 2; T.J. Hermel-Davidock et al., J.Polym. Sci. Part B: Polym. Phys. 2007, 45, 3338-3348, insbesondere die amphiphilen Blockcopolymere, besonders Seite 3339, 2. Spalte bis 3341 2.Spalte; WO 2004/055092 A1, insbesondere Formel (I), besonders Seite 7, Zeile 28 bis Seite 13, Zeile 15. WO 2005/007720 A1, insbesondere Formel (I), besonders Seite 8, Zeile 1 bis Seite 17, Zeile 10; WO 2007/020266 A1, insbesondere Formel (I), besonders Seite 3, Zeile 1 bis Seite 11, Zeile 6, WO 2008/049857 A1, insbesondere Formel (I), besonders Seite 3, Zeile 5 bis Seite 6, Zeile 20, WO 2008/049858 A1, insbesondere Formel (I) und (II) , besonders Seite 6, Zeile 1 bis Seite 12, Zeile 15, WO 2008/049859 A1, insbesondere Formel (I), besonders Seite 6, Zeile 1 bis Seite 11, Zeile 10, WO 2008/049860 A1, insbesondere Formel (I), besonders Seite 3, Zeile 1 bis Seite 9, Zeile 6, sowie DE-A-2 123 033, US 2008/0076886 A1, WO 2008/016889 und WO 2007/025007.

Es hat sich gezeigt, dass in der Zusammensetzung vorteilhaft mehrere Schlagzähigkeitsmodifikatoren **D** vorhanden sind.

Der Anteil an Schlagzähigkeitsmodifikatoren **D** wird vorteilhaft in einer Menge von 1 - 45 Gewichts-%, insbesondere 1 - 35 Gewichts-%, bezogen auf das Gewicht der Zusammensetzung, eingesetzt.

In einer weiteren bevorzugten Ausführungsform enthält die Zusammensetzung zusätzlich mindestens einen Füllstoff **F.** Bevorzugt handelt es sich hierbei um Glimmer, Talk, Kaolin, Wollastonit, Feldspat, Syenith, Chlorit, Bentonit, Montmorillonit, Calciumcarbonat (gefällt oder gemahlen), Dolomit, Quarz, Kieselsäuren (pyrogen oder gefällt), Cristobalit, Calciumoxid, Aluminiumhydroxid, Magnesiumoxid, Keramikhohlkugeln, Glashohlkugeln, organische Hohlkugeln, Glaskugeln, Farbpigmente. Als Füllstoff **F** sind sowohl die organisch beschichteten als auch die unbeschichteten kommerziell erhältlichen und dem Fachmann bekannten Formen gemeint.

Ein weiteres Beispiel sind funktionalisierte Alumoxane, wie z. B. in US 6,322,890 beschrieben.

Vorteilhaft beträgt der Gesamtanteil des gesamten Füllstoffs **F** 3 - 50 Gewichts-%, vorzugsweise 5 - 35 Gewichts-%, insbesondere 5 - 25 Gewichts-%, bezogen auf das Gewicht der gesamten Zusammensetzung.

In einer weiteren bevorzugten Ausführungsform enthält die Zusammensetzung ein physikalisches oder chemisches Treibmittel, wie es beispielsweise unter dem Handelsnamen Expancel™ der Firma Akzo Nobel oder Celogen™ der Firma Chemtura erhältlich ist.Der Anteil des Treibmittels beträgt vorteilhaft 0.1 - 3 Gewichts-%, bezogen auf das Gewicht der Zusammensetzung.

In einer weiteren bevorzugten Ausführungsform enthält die Zusammensetzung zusätzlich mindestens einen Epoxidgruppen-tragenden Reaktivverdünner **G.** Bei diesen Reaktivverdünnern **G** handelt es sich insbesondere um:
- Glycidylether von monofunktionellen gesättigten oder ungesättigten, verzweigten oder unverzweigten, zyklischen oder offenkettigen C₄ - C₃₀ Alkoholen, insbesondere ausgewählt aus der Gruppe bestehend aus Butanolglycidylether, Hexanolglycidylether, 2-Ethylhexanolglycidylether, Allylglycidylether, Tetrahydrofurfuryl- und Furfurylglycidylether, Trimethoxysilylglycidylether.
- Glycidylether von difunktionellen gesättigten oder ungesättigten, verzweigten oder unverzweigten, zyklischen oder offenkettigen C₂ - C₃₀ - Alkolen, insbesondere ausgewählt aus der Gruppe bestehend aus Ethylenglykol-, Butandiol-, Hexandiol-, Oktandiolgylcidylether, Cyclohexandimethanoldigylcidylether und Neopentylglycoldiglycidylether.
- Glycidylether von tri- oder polyfunktionellen, gesättigten oder ungesättigten, verzweigten oder unverzweigten, zyklischen oder offenkettigen Akoholen wie epoxidiertes Rhizinusöl, epoxidiertes Trimethylolpropan, epoxidiertes Pentaerythrol oder Polyglycidylether von aliphatischen Polyolen wie Sorbitol, Glycerin oder Trimethylolpropan.
- Glycidylether von Phenol- und Anilinverbindungen insbesondere ausgewählt aus der Gruppe bestehend aus Phenylglycidylether, Kresylglycidylether, p-tert.-Butylphenylglycidylether, Nonylphenolglycidylether, 3-n-Pentadecenyl-glycidylether (aus Cashewnuss-Schalen-Öl), N,N-Diglycidylanilin und Triglycdiyl von p-Aminophenol.
- Epoxidierte Amine wie N, N-Diglycidylcyclohexylamin.
- Epoxidierte Mono- oder Dicarbonsäuren insbesondere ausgewählt aus der Gruppe bestehend aus Neodecansäure-glycidylester, Methacrylsäureglycidylester, Benzoesäureglycidylester, Phthalsäure-, Tetra- und Hexahydrophthalsäurediglycidylester und Diglycidylester von dimeren Fettsäuren sowie Terephthalsäure- und Trimelitsäuregylcidylester.
- Epoxidierte di- oder trifunktionelle, nieder- bis hochmolekulare Polyetherpolyole, insbesondere Polyethylenglycol-diglycidylether oder Polypropyleneglycol-diglycidylether.

Besonders bevorzugt sind Hexandioldiglycidylether, Kresylglycidylether, p-*tert*.-Butylphenylglycidylether, Polypropylenglycoldiglycidylether und Polyethylenglycoldiglycidylether.

Vorteilhaft beträgt der Gesamtanteil des epoxidgruppentragenden Reaktivverdünners **G** 0.1 - 20 Gewichts-%, vorzugsweise 1 - 8 Gewichts-%, bezogen auf das Gewicht der gesamten Zusammensetzung.

Die Zusammensetzung kann weitere Bestandteile, insbesondere Katalysatoren, Stabilisatoren, insbesondere Hitze- und/oder Lichtstabilisatoren, Thixotropiermittel, Weichmacher, Lösungsmittel, mineralische oder organische Füllstoffe, Treibmittel, Farbstoffe und Pigmente, Korrosionsschutzmittel, tenside, Entschäumer und Haftvermittler umfassen.

Als Weichmacher eignen sich insbesondere Phenol-Alkylsulfonsäureester oder Benzolsulfonsäure-N-butylamid, wie sie als Mesamoll® bzw. Dellatol BBS von Bayer kommerziell erhältlich sind.

Als Stabilisatoren eignen sich insbesondere gegebenenfalls substituierte Phenole, wie Butylhydroxytoluol (BHT) oder Wingstay® T (Elikem), sterisch gehinderte Amine oder N-Oxylverbindungen wie TEMPO (Evonik).

Die beschriebenen hitzehärtenden Epoxidharzzusammensetzungen zeichnen sich nach Aushärtung durch eine hohe Schlagzähigkeit sowie eine hohe Glasübergangstemperatur, typischerweise von mehr als 100°C, aus.

Es hat sich gezeigt, dass sich die beschriebenen hitzehärtenden Epoxidharzzusammensetzungen besonders als einkomponentige Klebstoffe eignen. Ein derartiger einkomponentiger Klebstoff weist breite Einsatzmöglichkeiten auf. Insbesondere sind hiermit hitzehärtende einkomponentige Klebstoffe realisierbar, die sich durch eine hohe Schlagzähigkeit. Solche Klebstoffe werden für das Verkleben von hitzestabilen Materialien benötigt. Unter hitzestabilen Materialien werden Materialien verstanden, welche bei einer Aushärtetemperatur von 100 - 220°C, vorzugsweise 120 - 200°C zumindest während der Aushärtezeit formstabil sind. Insbesondere handelt es sich hierbei um Metalle und Kunststoffe wie ABS, Polyamid, Polyphenylenether, Verbundmaterialien wie SMC, ungesättigte Polyester GFK, Epoxid- oder Acrylatverbundwerkstoffe. Bevorzugt ist die Anwendung, bei der zumindest ein Material ein Metall ist. Als besonders bevorzugte Verwendung gilt das Verkleben von gleichen oder verschiedenen Metallen, insbesondere im Rohbau in der Automobilindustrie. Die bevorzugten Metalle sind vor allem Stahl, insbesondere elektrolytisch verzinkter, feuerverzinkter, beölter Stahl, Bonazink-beschichteter Stahl, und nachträglich phosphatierter Stahl, sowie Aluminium insbesondere in den im Autobau typischerweise vorkommenden Varianten.

Ein solcher Klebstoff wird insbesondere zuerst mit den zu verklebenden Materialien bei einer Temperatur von zwischen 10° C und 80°C, insbesondere zwischen 10°C und 60°C, kontaktiert und später ausgehärtet bei einer Temperatur von typischerweise 100 - 220°C, vorzugsweise 120 - 200°C.

Ein weiterer Aspekt der vorliegenden Erfindung betrifft deshalb ein Verfahren zur Verklebung von hitzestabilen Substraten, welches die Schritte umfasst:
i) Applizieren einer hitzehärtenden Epoxidharzzusammensetzung , wie sie vorgängig im Detail beschrieben wurde, auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der hitzehärtenden Epoxidharzzusammensetzung auf eine Temperatur von 100 - 220°C, insbesondere von 120 - 200°C, bevorzugt zwischen 160 und 190°C;
wobei das Substrat **S2** aus dem gleichen oder einem unterschiedlichen Material wie das Substrat **S1** besteht.

Das Substrat **S2** besteht hierbei aus dem gleichen oder einem unterschiedlichen Material wie das Substrat **S1.**

Aus einem derartigen Verfahren zum Verkleben von hitzestabilen Materialien resultiert ein verklebter Artikel. Ein derartiger Artikel ist vorzugsweise ein Fahrzeug oder ein Anbauteil eines Fahrzeugs.

Selbstverständlich können mit einer erfindungsgemässen Zusammensetzung neben hitzehärtenden Klebstoffen auch Dichtmassen oder Beschichtungen realisiert werden. Ferner eignen sich die erfindungsgemässen Zusammensetzungen nicht nur für den Automobilbau sondern auch für andere Anwendungsgebiete. Besonders zu erwähnen sind verwandte Anwendungen im Transportmittelbau wie Schiffe, Lastwagen, Busse oder Schienenfahrzeuge oder im Bau von Gebrauchsgütern wie beispielsweise Waschmaschinen.

Die mittels einer erfindungsgemässen Zusammensetzung verklebten Materialien kommen bei Temperaturen zwischen typischerweise 120°C und -40°C, vorzugsweise zwischen 100°C und -40°C, insbesondere zwischen 80°C und -40°C zum Einsatz.

Eine besonders bevorzugte Verwendung der erfindungsgemässen hitzehärtenden Epoxidharzzusammensetzung ist dessen Verwendung als hitzehärtender Rohbauklebstoff im Fahrzeugbau.

Ein weiterer Aspekt der vorliegenden Erfindung betrifft somit eine ausgehärtete Epoxidharzzusammensetzung, welche erhalten wird durch das Erhitzen einer vorgängig im Detail beschriebenen hitzehärtenden Epoxidharzzusammensetzung.

Es hat sich gezeigt, dass Zusammensetzungen, welche Silane der Formel (I), insbesondere der Formel (I a) enthalten, eine starke Absenkung der Aushärtungstemperatur ermöglichen, ohne dass jedoch deren Lagerstabilität stark verschlechtert wird. Es ist somit möglich, den erwünschten Anforderungen der Industrie nach Absenkung der Aushärtetemperatur von unter 180°C, bereits nach sehr kurzer Zeit, typischerweise 10 bis 15 Minuten, zu entsprechen. Weiterhin hat es sich gezeigt, dass sich hohe Glasübergangstemperaturen von mehr als 100°C sowie erhöhte Schlagfestigkeiten erreichen lassen, welche insbesondere für den Einsatz dieser einkomponentige hitzehärtende Epoxidharzzusammensetzungen als Rohbauklebstoffe für den Fahrzeugbau gefordert werden.

Weiterhin hat es sich gezeigt, dass die Silane der Formel(I) zu erhöhter Haftung auf diversen Untergründen führt. Dies ist einerseits im Gebiete der Epoxidharzklebstoffe oder -beschichtungen, aber andererseits auch in anderen Gebieten der Fall.

Somit können Silane der Formel (I) auch generell als Haftvermittler, zum Beispiel in Primern für Klebstoffe, insbesondere für feuchtigkeitshärtende einkomponentige Polyurethanklebstoffe, verwendet werden.

### Beispiele

### Herstellung von 1,1-Dimethyl-3-(3-(trimethoxysilyl)propyl)harnstoff:

5.0 g (46.5 mmol) N,N-dimethylcarbamoyl-chlorid (Sigma-Aldrich, Schweiz) und 40ml getrocknetes Dioxan (Sigma-Aldrich, Schweiz) wurden in einen 250 ml 2-Halsrundkolben, welcher mit Rückflusskühler ausgerüstet war, gegeben. Anschliessend wurden 4.71 g (46.5 mmol) Triethylamin (Sigma-Aldrich, Schweiz) und 8.34 g (46.5 mmol Amin) 3-Aminopropyltrimethoxysilan (Silquest A-1110, Momentive Performance Materials Inc., USA) unter Rühren und Stickstoff zugetropft. Nach dem Abklingen der exothermen Reaktion wurde die entstandene weissliche Suspension während 3 Stunden bei 90°C gerührt. Hierbei konnte ein langsamer Farbwechsel nach orange beobachtet werden. Nach dem Abkühlen auf 50°C wurde durch doppelte Filtration der Festkörper abgetrennt und das Lösungsmittel am Rotationsverdampfer während 1 Stunde bei 60°C abgezogen. So wurden 9.6 g des gewünschten Silanes als braune Flüssigkeit erhalten. Das Silan wurde als ***DMA1100*** bezeichnet und ohne weitere Reinigung verwendet.
Auf einem FT-IR Gerät 1600 von Perkin-Elmer wurde das Infrarotspektrum von ***DMA1100*** gemessen (ATR-Messeinheit mit ZnSe-Kristall, Absorptionsbanden in Wellenzahlen (cm⁻¹) angegeben (Messfenster: 4000-650 cm⁻¹):
IR (cm⁻¹): 3343 v(NH), 2938 v(CH), 2838 v(CH), 1631 v(CO), 1532 δ(CNH)+ν(CN), 1268 ν(CN)+δ(CNH), 1226 ν(CN)+δ(CNH), 1074 ν(SiO)+ν(SiC), 805 ν(SiO)+ν(SiC), 767 ν(SiO)+ν(SiC).

### 3,3'-(4-Methyl-1,3-phenylen)bis (1,1-dimethylharnstoff) ("HSRef.1")

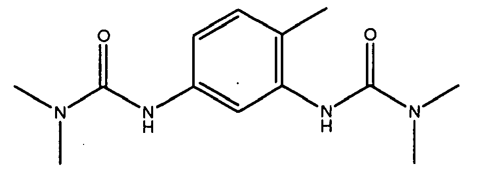

3,3'-(4-Methyl-1,3-phenylen)bis (1,1-dimethylharnstoff) wurde bei Sigma-Aldrich, Schweiz, bezogen. Diese Harnstoffverbindung ist nicht erfindungsgemäss.

### Herstellung Schlagzähigkeitsmodifikator SM1

150 g Poly-THF®2000 (OH-Zahl 57 mg/g KOH, BASF) und 150 g Liquiflex H (OH-Zahl 46 mg/g KOH, Krahn) wurden 30 Minuten unter Vakuum bei 105°C getrocknet. Nachdem die Temperatur auf 90°C reduziert worden war, wurden 64.0 g Isophorondiisocyanat (Evonik) und 0.13 g Dibutylzinndilaurat zugegeben. Die Reaktion wurde unter Vakuum bei 90°C bis zur Konstanz des NCO-Gehaltes bei 3.30% nach 2.5 h geführt (berechneter NCO-Gehalt: 3.38%). Anschliessend wurden 103.0 g Cardolite® NC-700 (Cardanol, Cardolite) als Blockierungsmittel zugegeben. Es wurde bei 105°C unter Vakuum weitergerührt, bis der NCO-Gehalt nach 3.5h unter 0.1% gesunken war.

### Herstellung von hitzehärtenden Epoxidharzzusammensetzungen

Es wurden gemäss Tabellen 1 die Vergleichszusammensetzungen ***Ref.1*** und ***Ref.2*** sowie die erfindungsgemässe Zusammensetzung ***1*** hergestellt. Die Bestandteile sind jeweils in Gewichtsteilen angegeben. Die Harnstoffverbindungen ***DMA1100*** und ***HSRef.1*** wurden hierbei so eingesetzt, dass gleiche Mengen an Harnstoffgruppen vorhanden sind.

### Prüfmethoden:

### Zugscherfestigkeit (ZSF) (DIN EN 1465)

Die Probekörper wurden aus den beschriebenen Beispiel-Zusammensetzungen und mit elektrolytisch verzinktem DC04 Stahl (eloZn) mit dem Mass 100 x 25 x 0.8 mm, hergestellt, dabei betrug die Klebfläche 25 x 10mm bei einer Schichtdicke von 0.3mm. Gehärtet wurde 30 Minuten bei 175°C. Die Zuggeschwindigkeit betrug 10mm/min. Der so gemessene Wert wird als "*ZSF_{175°C}* " bezeichnet.

Um die Unterbrandfähigkeit zu vergleichen, wurden weiterhin Zugscherfestigkeits-Probekörper entsprechend hergestellt und gemessen, wobei die Aushärtung durch Erhitzung während 15 Minuten bei 165°C ("*ZSF_{165°C}*") erfolgte.

### Schlagschälarbeit (ISO 11343)

Die Probekörper wurden aus den beschriebenen Beispiel-Zusammensetzungen und mit elektrolytisch verzinktem DC04 Stahl (eloZn) mit dem Mass 90 x 20 x 0.8mm hergestellt, dabei betrug die Klebfläche 20 x 30mm bei einer Schichtdicke von 0.3mm. Gehärtet wurde 30 Min. bei 180°C. Die Messung der Schlagschälarbeit erfolgte jeweils bei Raumtemperatur Die Schlaggeschwindigkeit betrug 2 m/s. Als Bruchenergie (*BE*) in Joule wird die Fläche unter der Messkurve (von 25% bis 90%, gemäss ISO 11343) angegeben.

### Viskosität

Die Klebstoffproben wurde auf einem Viskosimeter Bohlin CVO 120, Platte/Platte (Durchmesser 25mm, Spaltmass 1mm), Frequenz 5 Hz, 0.01 Auslenkung, Temperatur 23 - 53°C, 10°C/min, gemessen. Die Viskosität wurde hierbei als komplexe Viskosität bei 25°C aus der gemessenen Kurve heraus ermittelt.

### Lagerstabilität

Zur Bestimmung der Lagerstabilität bei Raumtemperatur wurde eine beschleunigtes Verfahren bei erhöhter Temperatur herangezogen: Es wurden die Viskosität der Zusammensetzungen bei Raumtemperatur unmittelbar nach Herstellung gemessen ("η₀") und mit der bei Raumtemperatur nach Lagerung in einem dicht geschlossenen Gefäss bei 60°C und 7 Tagen ("η_{Δ}") verglichen. Als offensichtliches Mass für die Lagerstabilität wurde der Wert Δη gemäss der Formel (ηΔ/ η₀)-1 bestimmt.

### Glasübergangstemperatur (T_{g})

Die Glasübergangstemperatur wurde mittels DSC bestimmt. Es wurde hierfür ein Gerät Mettler DSC822^{e} verwendet. 10 - 20 mg der Zusammensetzungen wurden jeweils in einen Aluminiumtiegel eingewogen. Nachdem die Probe im DSC während 30 Min. bei 175°C gehärtet worden war, wurde die Probe auf minus 20°C abgekühlt und anschliessend mit einer Heizrate von 10°C/min bis 150°C aufgeheizt. Die Glasübergangstemperatur wurde mit Hilfe der DSC-Software als Wendepunkt aus der gemessenen DSC-Kurve bestimmt.

### Aushärtungsverhalten

Von den so gemischten Epoxidharz-Zusammensetzungen wurde auf einem Mettler DSC 822^{E} Gerät jeweils ein DSC aufgenommen (Aufheizung von 25°C auf 250°C, mit einer Heizgeschwindigkeit von 10 K/Minute). Aus der gemessenen Kurve wurden einerseits das Maximum des Reaktionspeaks als T_{Peak-DSC} sowie des aus der Kurve berechneten Onsets T_{onset-DSC} bestimmt.

**Tabelle 1. Zusammensetzungen und Ergebnisse.**

| | ***Ref1*** | ***Ref2*** | ***1*** |
|---|---|---|---|
| D.E.R.™ 331 (Dow) Bisphenol-A-Digylcidylether, Epoxid-Füssigharz | 40.0 | 40.0 | 40.0 |
| Polypox R7 (UPPC) tert.-Butylphenylglycidylether | 3.0 | 3.0 | 3.0 |
| Polydis® 3614 (Struktol) Epoxidharz-modifiziertes Acrylnitril/Butadien-Copolymer (CTBN) | 15.0 | 15.0 | 15.0 |
| ***SM1*** | 15.0 | 15.0 | 15.0 |
| ***HSRef.1*** | | 0.51 | |
| ***DMA1100*** | | | 0.97 |
| Dicyandiamid (Degussa) | 4.0 | 4.0 | 4.0 |
| Füllstoffgemisch | 19.0 | 19.0 | 19.0 |
| *ZSF_{175°C}* [MPa] | 21.4 | 21.7 | 18.7 |
| *ZSF_{165°C}* [MPa] | 0.0* | 20.1 | 18.4 |
| *BE¹* bei 23°C [J] | 14.2 | 16.1 | 10.7 |
| η₀[mPas] | 395 | 350 | 412 |
| η_{Δ}[mPas] | 395 | 1340 | 517 |
| Δη [%] | 0 | 283 | 25 |
| T_{g} [°C] | 106 | 105 | 104 |
| T_{Onset-DSC} [°C] | 189 | 172 | 168 |
| T_{Peak-DSC} [°C] | 198 | 181 | 178 |

| | | | |
|---|---|---|---|
| *¹BE* = Bruchenergie *Klebstoff härtete nicht aus. | | | |

Die Ergebnisse aus Tabelle 1 zeigen, dass das Vergleichsbeispiel ***Ref1*** im Wesentlichen gleich lagerstabil wie das Beispiel ***1*** ist, aber bei tieferen Aushärtungstemperaturen (165°C, 15 Min.) im Gegensatz zu Beispiel ***1*** nicht aushärtete. Das Vergleichsbeispiel ***Ref2*** zeigt, dass dank des aromatischen Harnstoffs ***HSRef.1*** die Aushärtung bei tieferen Temperaturen ermöglicht wird, dass aber eine derartige Zusammensetzung nicht lagerstabil ist. Währenddessen ist das Beispiel ***1*** sowohl lagerstabil als auch bei tieferen Temperaturen aushärtbar. Das Aushärten bei tieferen Temperaturen ist auch aus den tieferen DSC-Werten (T_{Peak-DSC} und T_{onset-DSC}) ersichtlich.

Zudem zeigen die Werte aus Tabelle 1, dass das Beispiel ***1*** neben einer hohen Glasübergangstemperatur und hohen Schlagzähigkeit derart gute mechanische Eigenschaften aufweist, dass es bestens für den Einsatz als Rohbauklebstoff für den Fahrzeugbau geeignet ist.

## Patentansprüche

1. Verwendung eines Silans der Formel (I) oder eines Substrates, dessen Oberfläche mit einem Silan der Formel (I) beschichtet oder derivatisiert ist, als durch erhöhte Temperatur aktivierbarer Härter für Epoxidharze 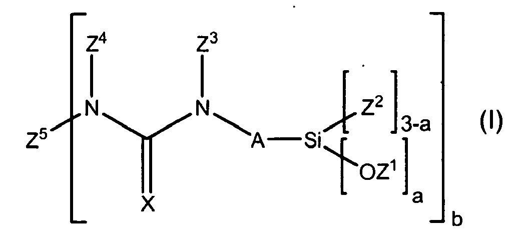
wobei A für eine, allenfalls verzweigte, Alkylengruppe mit 1 bis 4 C-Atomen oder für eine Phenylengruppe steht;
Z¹ für H oder eine Alkylgruppe mit 1 bis 4 C-Atomen, insbesondere für eine Methyl- oder Ethylgruppe, steht;
Z² für H oder eine Phenylgruppe oder eine Alkylgruppe mit 1 bis 8 C-Atomen, insbesondere für eine Methylgruppe, steht;
Z³ für H oder eine einwertige aromatische oder cycloaliphatische oder aliphatische Gruppe mit 1 bis 8 C-Atomen, welche gegebenenfalls mindestens eine Carbonsäureester-, Nitril-, Nitro-, Phosphonsäureester-, Sulfon- oder Sulfonsäureester-Gruppe aufweist, oder für A-Si(Z²)₃₋ₐ(OZ¹)ₐ steht;
Z⁴ für H oder eine einwertige aromatische oder cycloaliphatische oder aliphatische Gruppe mit 1 bis 8 C-Atomen steht;
Z⁵ für eine b-wertige aromatische oder araliphatische oder cycloaliphatische oder aliphatische Gruppe mit 1 bis 40 C-Atomen oder für die Gruppe
A-Si(Z²)₃₋ₐ(OZ¹)ₐ steht;
X für O oder S steht;
a für 1 oder 2 oder 3, insbesondere für 2 oder 3, steht und
b für 1 oder 2 oder 3 oder 4 steht,
mit der Massgabe, dass entweder Z³ oder Z⁴ für H steht.

2. Verwendung gemäss Anspruch 1, **dadurch gekennzeichnet**, A eine für Propylengruppe steht.

3. Verwendung gemäss Anspruch 1 oder 2, **dadurch gekennzeichnet, dass** b verschieden von 1 ist und dass Z⁴ für H steht.

4. Verwendung gemäss Anspruch 1 oder 2, **dadurch gekennzeichnet, dass** b für 1 steht.

5. Verwendung gemäss einem der vorhergehenden Ansprüche, **dadurch gekennzeichnet, dass** das Silan der Formel (I) keine aromatischen Anteile aufweist.

6. Substrat, dessen Oberfläche mit Silan der Formel (I) beschichtet oder derivatisiert ist 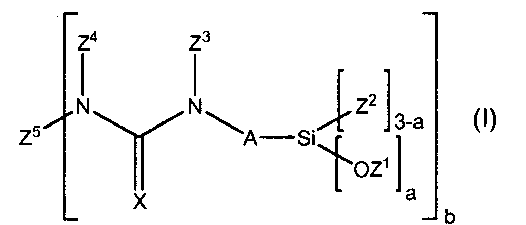
wobei A für eine, allenfalls verzweigte, Alkylengruppe mit 1 bis 4 C-Atomen oder für eine Phenylengruppe steht;
Z¹ für H oder eine Alkylgruppe mit 1 bis 4 C-Atomen, insbesondere für eine Methyl- oder Ethylgruppe, steht;
Z² für H oder eine Phenylgruppe oder eine Alkylgruppe mit 1 bis 8 C-Atomen, insbesondere für eine Methylgruppe, steht;
Z³ für H oder eine einwertige aromatische oder cycloaliphatische oder aliphatische Gruppe mit 1 bis 8 C-Atomen, welche gegebenenfalls mindestens eine Carbonsäureester-, Nitril-, Nitro-, Phosphonsäureester-, Sulfon- oder Sulfonsäureester-Gruppe aufweist, oder für A-Si(Z²)₃₋ₐ(OZ¹)ₐ steht;
Z⁴ für H oder eine einwertige aromatische oder cycloaliphatische oder aliphatische Gruppe mit 1 bis 8 C-Atomen steht;
Z⁵ für eine b-wertige aromatische oder araliphatische oder cycloaliphatische oder aliphatische Gruppe mit 1 bis 40 C-Atomen oder für die Gruppe
A-Si(Z²)₃₋ₐ(OZ¹)ₐ steht;
X für O oder S steht;
a für 1 oder 2 oder 3, insbesondere für 2 oder 3, steht und
b für 1 oder 2 oder 3 oder 4 steht,
mit der Massgabe, dass entweder Z³ oder Z⁴ für H steht;
wobei das Substrat ein anorganischer Füllstoff, insbesondere ein anorganischer Füllstoff, welcher Ca- und/oder Si- und/oder Al-Atome, bevorzugt Si- und/oder Al-Atome, enthält, ist.

7. Substrat gemäss Anspruch 6, **dadurch gekennzeichnet, dass** die mittlere Partikelgrösse des Füllstoffs kleiner als 50 Mikrometer, insbesondere kleiner als 1 Mikrometer ist.

8. Silan der Formel (I a) 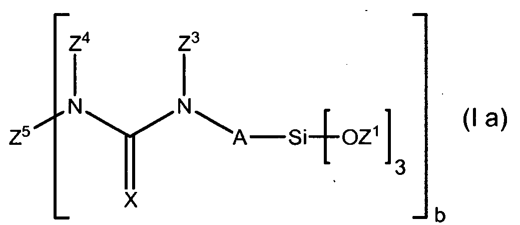 wobei
entweder A für CH₂-CH₂-CH₂, Z¹ für CH₃, Z³ für H, Z⁴ für CH₃, Z⁵ für CH₃, X für O und b für 1 steht;
oder A für CH₂-CH₂-CH₂, Z¹ für CH₃, Z³ für CH₃, Z⁴ für H, Z⁵ für CH₃, X für O und b für 1 steht;
oder A für CH₂, Z¹ für CH₃ oder CH₂CH₃, Z³ für H, Z⁴ für eine einwertige aliphatische Gruppe mit 1 bis 12 C-Atomen, Z⁵ für eine einwertige aliphatische Gruppe mit 1 bis 12 C-Atomen, X für O und b für 1 steht.

9. Hitzehärtende Epoxidharzzusammensetzung enthaltend
- mindestens ein Epoxidharz **EH** mit durchschnittlich mehr als einer Epoxidgruppe pro Molekül;
- mindestens ein Silan der Formel (I) oder ein Substrat gemäss Anspruch 6 oder 7 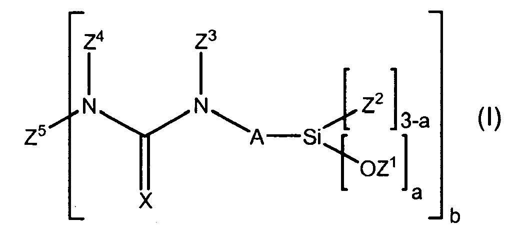
wobei A für eine, allenfalls verzweigte, Alkylengruppe mit 1 bis 4 C-Atomen oder für eine Phenylengruppe steht;
Z¹ für H oder eine Alkylgruppe mit 1 bis 4 C-Atomen, insbesondere für eine Methyl- oder Ethylgruppe, steht;
Z² für H oder eine Phenylgruppe oder eine Alkylgruppe mit 1 bis 8 C-Atomen, insbesondere für eine Methylgruppe, steht;
Z³ für H oder eine einwertige aromatische oder cycloaliphatische oder aliphatische Gruppe mit 1 bis 8 C-Atomen, welche gegebenenfalls mindestens eine Carbonsäureester-, Nitril-, Nitro-, Phosphonsäureester-, Sulfon- oder Sulfonsäureester-Gruppe aufweist, oder für A-Si(Z²)₃₋ₐ(OZ¹)ₐ steht;
Z⁴ für H oder eine einwertige aromatische oder cycloaliphatische oder aliphatische Gruppe mit 1 bis 8 C-Atomen steht;
Z⁵ für eine b-wertige aromatische oder araliphatische oder cycloaliphatische oder aliphatische Gruppe mit 1 bis 40 C-Atomen oder für die Gruppe
A-Si(Z²)₃₋ₐ(OZ¹)ₐ steht;
X für O oder S steht;
a für 1 oder 2 oder 3, insbesondere für 2 oder 3, steht und
b für 1 oder 2 oder 3 oder 4 steht,
mit der Massgabe, dass entweder Z³ oder Z⁴ für H steht.

10. Hitzehärtende Epoxidharzzusammensetzung gemäss Anspruch 9, **dadurch gekennzeichnet, dass** der Anteil des Silans der Formel (I) oder des Substrates gemäss Anspruch 6 oder 7 in der Zusammensetzung derart gewählt ist, dass das Silan der Formel (I) oder der Silananteil des Substrates 0.001 - 20 Gewichts-%, insbesondere 0.1 - 15 Gewichts-%, bevorzugt 0.5 - 10 Gewichts-%, bezogen auf das Gewicht der hitzehärtenden Epoxidharzzusammensetzung, beträgt.

11. Hitzehärtende Epoxidharzzusammensetzung gemäss Anspruch 9 oder 10, **dadurch gekennzeichnet, dass** sie zusätzlich mindestens einen wärmeaktivierbaren Härter **B** enthält, welcher insbesondere ausgewählt ist aus der Gruppe bestehend aus Dicyandiamid, Guanamine, Guanidine, Aminoguanidine und deren Derivate; substituierte Harnstoffe, insbesondere 3-(3-Chlor-4-methylphenyl)-1,1-dimethylharnstoff (Chlortoluron), oder Phenyl-Dimethylharnstoffe, insbesondere p-Chlorphenyl-N,N-dimethylharnstoff (Monuron), 3-Phenyl-1,1-dimethylharnstoff (Fenuron), 3,4-Dichlorphenyl-N,N-dimethylharnstoff(Diuron), N,N-Dimethylharnstoff, N-iso-Butyl-N',N'-dimethylharnstoff, 1,1'-(Hexan-1,6-diyl)bis(3,3'-dimethylharnstoff) sowie Imidazole, Imidazol-Salze, Imidazoline und Amin-Komplexe.

12. Hitzehärtende Epoxidharzzusammensetzung gemäss einem der Ansprüche 9 bis 11, **dadurch gekennzeichnet, dass** sie zusätzlich mindestens einen Schlagzähigkeitsmodifikator **D** enthält.

13. Hitzehärtende Epoxidharzzusammensetzung gemäss Anspruch 12, **dadurch gekennzeichnet, dass** der Schlagzähigkeitsmodifikator **D** ausgewählt ist aus der Gruppe bestehend aus blockierten Polyurethanpolymeren, Flüssigkautschuken, Epoxidharz-modifizierten Flüssigkautschuken, Blockcopolymeren und Core-Shell-Polymeren, insbesondere in einer Menge von 0.1 - 50 Gewichts-%, insbesondere von 0.5 - 35 Gewichts-%, bevorzugt von 1 - 20 Gewichts-%, bezogen auf das Gewicht der hitzehärtenden Epoxidharzzusammensetzung.

14. Hitzehärtende Epoxidharzzusammensetzung gemäss Anspruch 13, **dadurch gekennzeichnet, dass** ist der Schlagzähigkeitsmodifikator **D** ein blockiertes Polyurethanpolymer der Formel (IV), 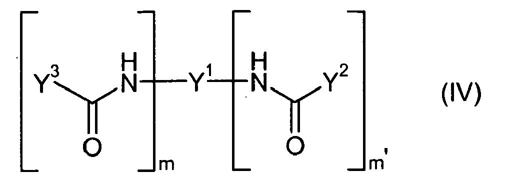 wobei
Y¹ für ein mit m+m' Isocyanatgruppen terminiertes lineares oder verzweigtes Polyurethanpolymer **PU1** nach dem Entfernen aller endständigen Isocyanatgruppen steht;
Y² unabhängig von einander für eine Blockierungsgruppe, welche sich bei einer Temperatur über 100°C abspaltet, steht;
Y³ unabhängig von einander für eine Gruppe der Formel (IV') steht 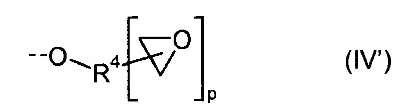 wobei R⁴ für einen Rest eines eine primäre oder sekundäre Hydroxylgruppe enthaltenden aliphatischen, cycloaliphatischen, aromatischen oder araliphatischen Epoxids nach dem Entfernen der Hydroxid- und Epoxidgruppen, steht;
p = 1, 2 oder 3 und
m und m' je für Werte zwischen 0 und 8 stehen, mit der Massgabe, dass m +m' für einen Wert von 1 bis 8 steht.

15. Verfahren zur Verklebung von hitzestabilen Substraten umfassend die Schritte.
i) Applizieren einer hitzehärtenden Epoxidharzzusammensetzung gemäss einem der Ansprüche 9 bis 14 auf die Oberfläche eines hitzestabilen Substrates **S1,** insbesondere eines Metalls;
ii) Kontaktieren der applizierten hitzehärtenden Epoxidharzzusammensetzung mit der Oberfläche eines weiteren hitzestabilen Substrates **S2,** insbesondere eines Metalls;
iii) Erhitzen der hitzehärtenden Epoxidharzzusammensetzung auf eine Temperatur von 100 - 220 °C, insbesondere von 120 - 200°C, bevorzugt zwischen 160 und 190°C;
wobei das Substrat **S2** aus dem gleichen oder einem unterschiedlichen Material wie das Substrat **S1** besteht.

16. Ausgehärtete Epoxidharzzusammensetzung, erhalten durch Erhitzen einer hitzehärtenden Epoxidharzzusammensetzung gemäss einem der Ansprüche einem der Ansprüche 9 bis 14.

## Claims

1. Use of a silane of the formula (I), or of a substrate whose surface is derivatized or coated with a silane of the formula (I), as an epoxy resin hardener which can be activated by elevated temperature 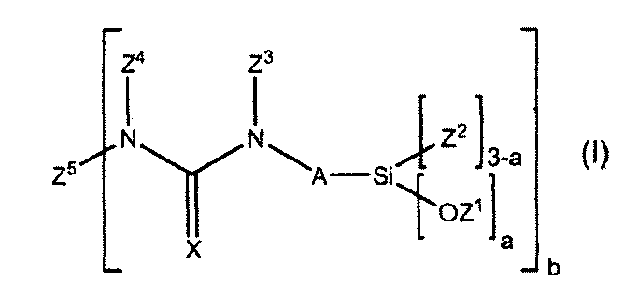
where A is an unbranched or branched alkylene group having 1 to 4 C atoms or is a phenylene group;
Z¹ is H or an alkyl group having 1 to 4 C atoms, and in particular is a methyl or ethyl group;
Z² is H or a phenyl group or an alkyl group having 1 to 8 C atoms, and in particular is a methyl group;
Z³ is H or a monovalent aromatic or cycloaliphatic or aliphatic group having 1 to 8 C atoms, which optionally has at least one carboxylic ester, nitrile, nitro, phosphonic ester, sulphone or sulphonic ester group, or is A-Si(Z²)₃₋ₐ(OZ¹)ₐ;
Z⁴ is H or a monovalent aromatic or cycloaliphatic or aliphatic group having 1 to 8 C atoms;
Z⁵ is a b-valent aromatic or araliphatic or cycloaliphatic or aliphatic group having 1 to 40 C atoms or is the group A-Si(Z²)₃₋ₐ(OZ¹)ₐ;
X is O or S;
a is 1 or 2 or 3, and in particular is 2 or 3, and
b is 1 or 2 or 3 or 4,
with the proviso that either Z³ or Z⁴ is H.

2. Use according to Claim 1, **characterized in that** A is a propylene group.

3. Use according to Claim 1 or 2, **characterized in that** b is different from 1 and in which Z⁴ is H.

4. Use according to Claim 1 or 2, **characterized in that** b is 1.

5. Use according to any of the preceding claims, **characterized in that** the silane of the formula (I) has no aromatic fractions.

6. Substrate whose surface is derivatized or coated with silane of the formula (I) 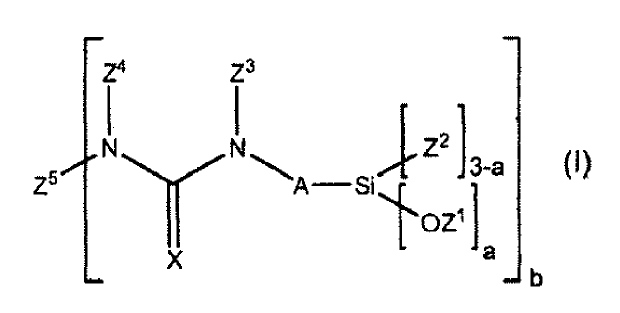
where A is an unbranched or branched alkylene group having 1 to 4 C atoms or is a phenylene group;
Z¹ is H or an alkyl group having 1 to 4 C atoms, and in particular is a methyl or ethyl group;
Z² is H or a phenyl group or an alkyl group having 1 to 8 C atoms, and in particular is a methyl group;
Z³ is H or a monovalent aromatic or cycloaliphatic or aliphatic group having 1 to 8 C atoms, which optionally has at least one carboxylic ester, nitrile, nitro, phosphonic ester, sulphone or sulphonic ester group, or is A-Si(Z²)₃₋ₐ(OZ¹)ₐ;
Z⁴ is H or a monovalent aromatic or cycloaliphatic or aliphatic group having 1 to 8 C atoms;
Z⁵ is a b-valent aromatic or araliphatic or cycloaliphatic or aliphatic group having 1 to 40 C atoms or is the group A-Si(Z²)₃₋ₐ(OZ¹)ₐ;
X is O or S;
a is 1 or 2 or 3, and in particular is 2 or 3, and
b is 1 or 2 or 3 or 4,
with the proviso that either Z³ or Z⁴ is H;
the substrate being an inorganic filler, more particularly an inorganic filler which comprises Ca and/or Si and/or Al atoms, preferably Si and/or Al atoms.

7. Substrate according to Claim 6, **characterized in that** the average particle size of the filler is less than 50 micrometers, more particularly less than 1 micrometer.

8. Silane of the formula (Ia) 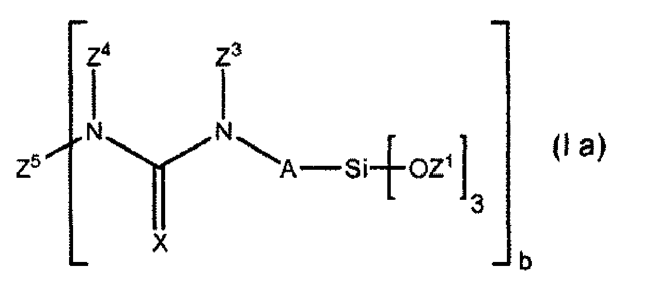 where
alternatively
A is CH₂-CH₂-CH₂, Z¹ is CH₃, Z³ is H, Z⁴ is CH₃,
Z⁵ is CH₃, X is O and b is 1;
or
A is CH₂-CH₂-CH₂, Z¹ is CH₃, Z³ is CH₃, Z⁴ is H,
Z⁵ is CH₃, X is O and b is 1;
or
A is CH₂, Z¹ is CH₃ or CH₂CH₃, Z³ is H, Z⁴ is a monovalent aliphatic group having 1 to 12 C atoms, Z⁵ is a monovalent aliphatic group having
1 to 12 C atoms, X is O and b is 1.

9. Thermosetting epoxy resin composition comprising
- at least one epoxy resin **EH** having on average more than one epoxide group per molecule;
- at least one silane of the formula (I) or a substrate according to Claim 6 or 7 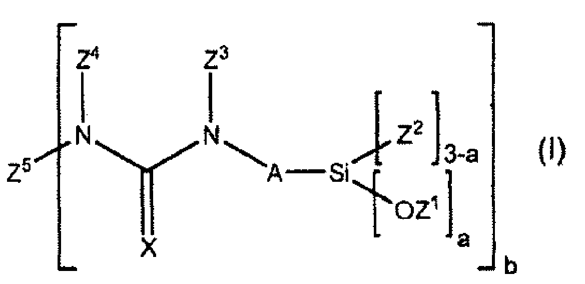
where A is an unbranched or branched alkylene group having 1 to 4 C atoms or is a phenylene group;
Z¹ is H or an alkyl group having 1 to 4 C atoms, and in particular is a methyl or ethyl group;
Z² is H or a phenyl group or an alkyl group having 1 to 8 C atoms, and in particular is a methyl group;
Z³ is H or a monovalent aromatic or cycloaliphatic or aliphatic group having 1 to 8 C atoms, which optionally has at least one carboxylic ester, nitrile, nitro, phosphonic ester, sulphone or sulphonic ester group, or is A-Si(Z²)₃₋ₐ(OZ¹)ₐ;
Z⁴ is H or a monovalent aromatic or cycloaliphatic or aliphatic group having 1 to 8 C atoms;
Z⁵ is a b-valent aromatic or araliphatic or cycloaliphatic or aliphatic group having 1 to 40 C atoms or is the group A-Si(Z²)₃₋ₐ(OZ¹)ₐ;
X is O or S;
a is 1 or 2 or 3, and in particular is 2 or 3, and
b is 1 or 2 or 3 or 4,
with the proviso that either Z³ or Z⁴ is H.

10. Thermosetting epoxy resin composition according to Claim 9, **characterized in that** the fraction of the silane of the formula (I) or of the substrate according to Claim 6 or 7 in the composition is selected such that the silane of the formula (I) or the silane fraction of the substrate amounts to 0.001% - 20% by weight, more particularly 0.1% - 15% by weight, preferably 0.5% - 10% by weight, based on the weight of the thermosetting epoxy resin composition.

11. Thermosetting epoxy resin composition according to Claim 9 or 10, **characterized in that** it further comprises at least one heat-activable hardener **B** which is selected more particularly from the group consisting of dicyandiamide, guanamines, guanidines, aminoguanidines or derivatives thereof; substituted ureas, more particularly 3-(3-chloro-4-methylphenyl)-1,1-dimethylurea (chlortoluron), or phenyl-dimethylureas, more particularly p-chlorophenyl-N,N-dimethylurea (monuron), 3-phenyl-1,1-dimethylurea (fenuron), 3,4-dichlorophenyl-N,N-dimethylurea (diuron), N,N-dimethylurea, N-isobutyl-N',N'-dimethylurea, 1,1'-(hexane-1,6-diyl)bis(3,3'-dimethylurea) and also imidazoles, imidazole salts, imidazolines and amino complexes.

12. Thermosetting epoxy resin composition according to any of Claims 9 to 11, **characterized in that** it further comprises at least one impact modifier **D.**

13. Thermosetting epoxy resin composition according to Claim 12, **characterized in that** the impact modifier **D** is selected from the group consisting of blocked polyurethane polymers, liquid rubbers, epoxy resin-modified liquid rubbers, block copolymers and core-shell polymers, more particularly in an amount of 0.1% - 50% by weight, more particularly of 0.5% - 35% by weight, preferably of 1% - 20% by weight, based on the weight of the thermosetting epoxy resin composition.

14. Thermosetting epoxy resin composition according to Claim 13, **characterized in that** the impact modifier D is a blocked polyurethane polymer of the formula (IV) 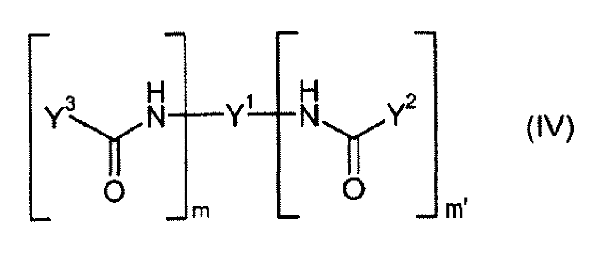 where
Y¹ is a linear or branched polyurethane polymer **PU1** terminated with m + m' isocyanate groups, following the removal of all of the terminal isocyanate groups;
Y² independently at each occurrence is a blocking group which is eliminated at a temperature above 100°C;
Y³ independently at each occurrence is a group of the formula (IV') 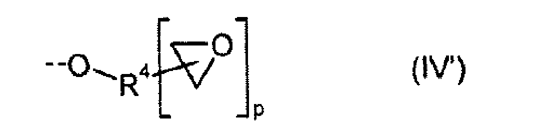 where R⁴ is a radical of an aliphatic, cycloaliphatic, aromatic or araliphatic epoxide comprising a primary or secondary hydroxyl group, following the removal of the hydroxide groups and epoxide groups;
p = 1, 2 or 3 and
m and m' are each values between 0 and 8, with the proviso that m + m' is a value from 1 to 8.

15. Method of adhesively bonding heat-stable substrates, comprising the steps of
i) applying a thermosetting epoxy resin composition according to any of Claims 9 to 14 to the surface of a heat-stable substrate **S1,** more particularly a metal;
ii) contacting the applied thermosetting epoxy resin composition with the surface of another heat-stable substrate **S2**, more particularly a metal;
iii) heating the thermosetting epoxy resin composition to a temperature of 100 - 200°C, more particularly of 120 - 200°C, preferably between 160 and 190°C;
the substrate **S2** being composed of the same material as or a different material from the substrate **S1**.

16. Cured epoxy resin composition obtained by heating a thermosetting epoxy resin composition according to any of Claims 9 to 14.

## Revendications

1. Utilisation d'un silane de formule (I) ou d'un substrat dont la surface est revêtue ou dérivée par un silane de formule (I) comme durcisseur activable à température élevée pour résines époxydes 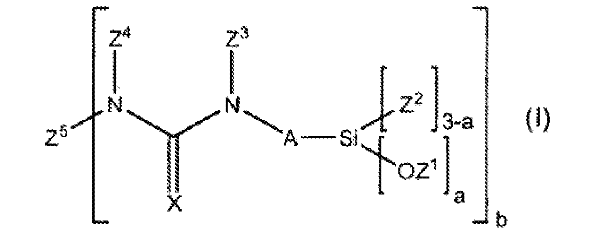 où
A représente un groupe alkylène éventuellement ramifié comprenant 1 à 4 atomes de carbone ou un groupe phénylène
Z¹ représente H ou un groupe alkyle comprenant 1 à 4 atomes de carbone, en particulier un groupe méthyle ou éthyle,
Z² représente H ou un groupe phényle ou un groupe alkyle comprenant 1 à 8 atomes de carbone, en particulier un groupe méthyle,
Z³ représente H ou un groupe aromatique ou cycloaliphatique ou aliphatique monovalent comprenant 1 à 8 atomes de carbone, qui présente le cas échéant au moins un groupe ester d'acide carboxylique, nitrile, nitro, ester d'acide phosphonique, sulfone ou ester d'acide sulfonique, ou A-Si(Z²)₃₋ₐ(OZ¹)ₐ
Z⁴ représente H ou un groupe aromatique ou cycloaliphatique ou aliphatique monovalent comprenant 1 à 8 atomes de carbone
Z⁵ représente un groupe aromatique ou araliphatique ou cycloaliphatique ou aliphatique b-valent comprenant 1 à 40 atomes de carbone ou le groupe A-Si(Z²)₃₋ₐ(OZ¹)ₐ
X représente O ou S
a vaut 1 ou 2 ou 3, en particulier 2 ou 3, et
b vaut 1 ou 2 ou 3 ou 4,
à condition que soit Z³ soit Z⁴ représente H.

2. Utilisation selon la revendication 1, **caractérisée en ce que** A représente un groupe propylène.

3. Utilisation selon la revendication 1 ou 2, **caractérisée en ce que** b est différent de 1 et **en ce que** Z⁴ représente H.

4. Utilisation selon la revendication 1 ou 2, **caractérisée en ce que** b vaut 1.

5. Utilisation selon l'une quelconque des revendications précédentes, **caractérisée en ce que** le silane de formule (I) ne présente pas de proportions aromatiques.

6. Substrat, dont la surface est revêtue ou dérivée par le silane de formule (I) 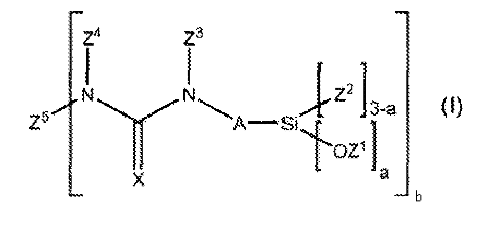 où
A représente un groupe alkylène éventuellement ramifié comprenant 1 à 4 atomes de carbone ou un groupe phénylène
Z¹ représente H ou un groupe alkyle comprenant 1 à 4 atomes de carbone, en particulier un groupe méthyle ou éthyle,
Z² représente H ou un groupe phényle ou un groupe alkyle comprenant 1 à 8 atomes de carbone, en particulier un groupe méthyle,
Z³ représente H ou un groupe aromatique ou cycloaliphatique ou aliphatique monovalent comprenant 1 à 8 atomes de carbone, qui présente le cas échéant au moins un groupe ester d'acide carboxylique, nitrile, nitro, ester d'acide phosphonique, sulfone ou ester d'acide sulfonique, ou A-Si(Z²)₃₋ₐ(OZ¹)ₐ
Z⁴ représente H ou un groupe aromatique ou cycloaliphatique ou aliphatique monovalent comprenant 1 à 8 atomes de carbone
Z⁵ représente un groupe aromatique ou araliphatique ou cycloaliphatique ou aliphatique b-valent comprenant 1 à 40 atomes de carbone ou le groupe A-Si(Z²)₃₋ₐ(OZ¹)ₐ
X représente O ou S
a vaut 1 ou 2 ou 3, en particulier 2 ou 3, et
b vaut 1 ou 2 ou 3 ou 4,
à condition que soit Z³ soit Z⁴ représente H
où le substrat est une charge inorganique, en particulier une charge inorganique qui contient des atomes de Ca et/ou de Si et/ou d'Al, de préférence de Si et/ou d'Al.

7. Substrat selon la revendication 6, **caractérisé en ce que** la grosseur moyenne des particules de la charge est inférieure à 50 micromètres, en particulier inférieure à 1 micromètre.

8. Silane de formule (Ia) 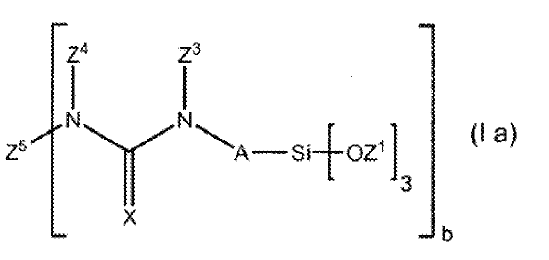 où
soit
A représente CH₂-CH₂-CH₂, Z¹ représente CH₃, Z³ représente H, Z⁴ représente CH₃, Z⁵ représente CH₃, X représente O et b représente 1
ou
A représente CH₂-CH₂-CH₂, Z¹ représente CH₃, Z³ représente CH₃, Z⁴ représente H, Z⁵ représente CH₃, X représente O et b représente 1
ou
A représente CH₂, Z¹ représente CH₃ ou CH₂CH₃, Z³ représente H, Z⁴ représente un groupe aliphatique monovalent comprenant 1 à 12 atomes de carbone, Z⁵ représente un groupe aliphatique monovalent comprenant 1 à 12 atomes de carbone, X représente O et b représente 1.

9. Composition thermodurcissable de résine époxyde, contenant
- au moins une résine époxyde EH comprenant en moyenne plus d'un groupe époxyde par molécule
- au moins un silane de formule (I) ou un substrat selon la revendication 6 ou 7 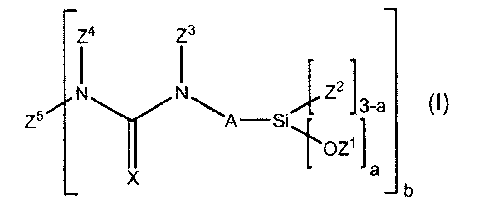
où
A représente un groupe alkylène éventuellement ramifié comprenant 1 à 4 atomes de carbone ou un groupe phénylène
Z¹ représente H ou un groupe alkyle comprenant 1 à 4 atomes de carbone, en particulier un groupe méthyle ou éthyle,
Z² représente H ou un groupe phényle ou un groupe alkyle comprenant 1 à 8 atomes de carbone, en particulier un groupe méthyle,
Z³ représente H ou un groupe aromatique ou cycloaliphatique ou aliphatique monovalent comprenant 1 à 8 atomes de carbone, qui présente le cas échéant au moins un groupe ester d'acide carboxylique, nitrile, nitro, ester d'acide phosphonique, sulfone ou ester d'acide sulfonique, ou A-Si(Z²)₃₋ₐ(OZ¹)ₐ
Z⁴ représente H ou un groupe aromatique ou cycloaliphatique ou aliphatique monovalent comprenant 1 à 8 atomes de carbone
Z⁵ représente un groupe aromatique ou araliphatique ou cycloaliphatique ou aliphatique b-valent comprenant 1 à 40 atomes de carbone ou le groupe A-Si(Z²)₃₋ₐ(OZ¹)ₐ
X représente O ou S
a vaut 1 ou 2 ou 3, en particulier 2 ou 3, et
b vaut 1 ou 2 ou 3 ou 4,
à condition que soit Z³ soit Z⁴ représente H.

10. Composition thermodurcissable de résine époxyde selon la revendication 9, **caractérisée en ce que** la proportion du silane de formule (I) ou du substrat selon la revendication 6 ou 7 dans la composition est choisie de manière telle que le silane de formule (I) ou la proportion de silane du substrat est de 0,001-20% en poids, en particulier de 0,1-15% en poids, de préférence de 0,5-10% en poids, par rapport au poids de la composition thermodurcissable de résine époxyde.

11. Composition thermodurcissable de résine époxyde selon la revendication 9 ou 10, **caractérisée en ce qu'**elle contient en outre au moins un durcisseur thermoactivable B, qui est en particulier choisi dans le groupe constitué par le dicyanodiamide, les guanamines, les guanidines, les aminoguanidines et leurs dérivés, les urées substituées, en particulier la 3-(3-chloro-4-méthylphényl)-1,1-diméthylurée (chlortoluron), ou les phényldiméthylurées, en particulier la p-chlorophényl-N,N-diméthylurée (Monuron), la 3-phényl-1,1-diméthylurée (Fenuron), la 3,4-dichlorophényl-N,N-diméthylurée (Diuron), la N,N-diméthylurée, la N-iso-butyl-N',N'-diméthylurée, la 1,1'-(hexane-1,6-diyl)bis(3,3'-diméthylurée) ainsi que les imidazoles, les sels d'imidazole, les imidazolines et les complexes d'amine.

12. Composition thermodurcissable de résine époxyde selon l'une quelconque des revendications 9 à 11, **caractérisée en ce qu'**elle contient en outre au moins un agent de modification de la résilience D.

13. Composition thermodurcissable de résine époxyde selon la revendication 12, **caractérisée en ce que** l'agent de modification de la résilience D est choisi dans le groupe constitué par les polymères de polyuréthane bloqués, les caoutchoucs liquides, les caoutchoucs liquides modifiés par une résine époxyde, les copolymères à blocs et les polymères à noyau-coquille (Core-Shell), en particulier en une quantité de 0,1 - 50% en poids, en particulier de 0,5 - 35% en poids, de préférence de 1 - 20% en poids, par rapport au poids de la composition thermodurcissable de résine époxyde.

14. Composition thermodurcissable de résine époxyde selon la revendication 13, **caractérisée en ce que** l'agent de modification de la résilience D est un polymère de polyuréthane bloqué de formule (IV) 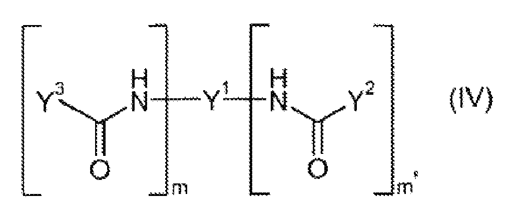 où
Y¹ représente un polymère de polyuréthane PU1 linéaire ou ramifié terminé par m+m' groupes isocyanate après l'élimination de tous les groupes isocyanate en position terminale
Y² représente, indépendamment l'un de l'autre, un groupe de blocage qui se dissocie à une température supérieure à 100°C
Y³ représente, indépendamment l'un de l'autre, un groupe de formule (IV') 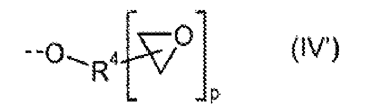
où
R⁴ représente un radical d'un époxyde, contenant un groupe hydroxyle primaire ou secondaire, aliphatique, cycloaliphatique, aromatique ou araliphatique après l'élimination des groupes hydroxyde et époxyde
p = vaut 1, 2, ou 3 et
m et m' représentent chacun des valeurs entre 0 et 8, à condition que m+m' présente une valeur de 1 à 8.

15. Procédé pour le collage de substrats stables à la chaleur comprenant les étapes
i) application d'une composition de résine époxyde thermodurcissable selon l'une quelconque des revendications 9 à 14 sur la surface d'un substrat S1 stable à la chaleur, en particulier d'un métal
ii) mise en contact de la composition de résine époxyde thermodurcissable appliquée avec la surface d'un autre substrat S2 stable à la chaleur, en particulier d'un métal
iii) chauffage de la composition de résine époxyde thermodurcissable à une température de 100-220°C, en particulier de 120-200°C, de préférence entre 160 et 190°C
le substrat S2 étant constitué par le même matériau que le substrat S1 ou par un matériau différent du substrat S1.

16. Composition de résine époxyde durcie, obtenue par chauffage d'une composition de résine époxyde thermodurcissable selon l'une quelconque des revendications 9 à 14.
